# EUROPEAN PATENT APPLICATION

(11) **EP 4 622 180 A1**
(43) Date of publication of application: **24.09.2025**
(21) Application number: 23902579.4
(22) Date of filing: 07.12.2023
(51) Int. Cl.: H04L 12/14

(54) **CHARGING METHOD, APPARATUS AND SYSTEM**

(30) Priority: 16.12.2022 CN 202211627887
(71) Applicant: Huawei Technologies Co., Ltd., Shenzhen, Guangdong 518129 (CN)
(72) Inventor: CHAI, Xiaoqian, Shenzhen, Guangdong 518129 (CN)
(74) Representative: Isarpatent
(86) International application number: PCT/CN2023/137063
(87) International publication number: WO 2024/125383

(57) **Abstract**

This application provides a charging method, an apparatus, and a system, and is applied to the field of converged charging. The method includes: After receiving a charging request message from a charging trigger function network element, a first charging function network element performs charging processing on a terminal device based on user data obtained from a second charging function network element, where the second charging function network element is a network element that provides a charging service for the terminal device before the first charging function network element. According to the foregoing solution, cross-area transmission of a large amount of charging information generated in a charging process can be reduced, to reduce signaling network load and improve cyber resilience.

## Description

This application claims priority to Chinese Patent Application No. 202211627887.8, filed with the China National Intellectual Property Administration on December 16, 2022 and entitled "CHARGING METHOD, APPARATUS, AND SYSTEM", which is incorporated herein by reference in its entirety.

### TECHNICAL FIELD

This application relates to the field of communication technologies, and in particular, to a charging method, an apparatus, and a system.

### BACKGROUND

The 3rd generation partnership project (3rd generation partnership project, 3GPP) introduces a converged charging architecture in a 5th generation (5th generation, 5G) network. To be specific, a core network communicates with a converged charging system through a unified interface. The charging system selects an online charging mode and/or an offline charging mode based on a user requirement and a service requirement. For example, the offline charging mode is used for traffic generated by using a 5G low-delay slice by a user, and the online charging mode is used for other traffic.

In a scenario in which the user is charged by using the converged charging architecture, a home charging function (home charging function, H-CHF) network element of the user usually needs to perform charging processing on the user. However, if a location of the user is changed, charging information of a terminal device may need to be frequently transmitted to the H-CHF across areas. Therefore, a large quantity of network resources need to be consumed, and a requirement on network reliability is high. Consequently, operation costs are increased.

Therefore, how to perform charging processing on the user to save a network resource is a problem that needs to be considered currently.

### SUMMARY

This application provides a charging method, an apparatus, and a system, to save a network resource needed for performing charging processing on a user, and reduce operation costs.

According to a first aspect, a charging method is provided. The method may be performed by a first charging function network element, or may be performed by a component (for example, a chip or a circuit) of the first charging function network element. For ease of description, an example in which the first charging function network element performs the method is used for description herein.

The charging method includes: The first charging function network element receives a charging request message from a charging trigger function network element, where the charging request message is for requesting to charge a terminal device. The first charging function network element performs charging processing on the terminal device based on user data of the terminal device, where the user data is received by the first charging function network element from a second charging function network element, and the second charging function network element is a network element that provides a charging service for the terminal device before the first charging function network element.

Based on the foregoing solution, after receiving the charging request message from the charging trigger function network element, the first charging function network element performs charging processing on the terminal device based on the user data obtained from the second charging function network element. According to the foregoing solution, cross-area transmission of a large amount of charging data generated in a charging process can be reduced, to save a network resource and reduce operation costs.

For example, when a network is divided into a plurality of areas (for example, the network is deployed based on provinces in China, one network crosses a plurality of countries in Europe, and an operator network covers a plurality of islands in a coastal country), a plurality of core networks and charging systems need to be deployed in the plurality of areas. If a home charging system is used to charge the terminal device, when the terminal device moves to an area outside a home area, a large amount of charging information (for example, information such as a call detail record) generated by the terminal device in real time needs to be routed to the home charging system of the terminal device. Transmission of the charging information increases signaling network load and the operation costs, and wastes a large quantity of network resources. However, in the foregoing solution, a charging function network element (namely, the charging function network element that receives the charging request message) nearest to the terminal device is used to charge the terminal device, so that the network resource can be saved.

With reference to the first aspect, in some implementations of the first aspect, the method further includes: The first charging function network element determines to obtain the user data of the terminal device from the second charging function network element. The first charging function network element sends a data obtaining request message to the second charging function network element, where the data obtaining request message is for requesting to obtain the user data of the terminal device. The first charging function network element receives the user data from the second charging function network element.

Based on the foregoing solution, when determining to obtain the user data of the terminal device from the second charging function network element, the first charging function network element requests the user data of the terminal device from the second charging function network element, to perform charging processing on the terminal device. The second charging function network element is the network element that provides the charging service for the terminal device before the first charging function network element. In other words, in the foregoing solution, a serving charging function network element of the terminal device is used to maintain the user data of the terminal device. When the serving charging function network element of the terminal device is switched, the user data needs to migrate only once, so that the network resource can be saved.

With reference to the first aspect, in some implementations of the first aspect, before the first charging function network element receives the charging request message from the charging trigger function network element, the method further includes: The first charging function network element receives first information from the second charging function network element, where the first information indicates that the second charging function network element is a network element that currently provides the charging service for the terminal device, and the first information includes address information of the second charging function network element. The first charging function network element stores the address information of the second charging function network element and an identifier of the terminal device. Before the first charging function network element sends the data obtaining request message to the second charging function network element, the method further includes: The first charging function network element obtains the address information of the second charging function network element from local storage based on the identifier of the terminal device. That the first charging function network element sends a data obtaining request message to the second charging function network element includes: The first charging function network element sends the data obtaining request message to the second charging function network element based on the address information of the second charging function network element.

Based on the foregoing solution, when serving as the serving charging function network element of the terminal device, the second charging function network element may indicate, to the first charging function network element in advance, that the second charging function network element is the network element that currently provides the charging service for the terminal device. In this case, when determining to perform charging processing on the terminal device, the first charging function network element may learn that a network element that previously provides the charging service for the terminal device is the second charging function network element, so that the first charging function network element can request to obtain the user data of the terminal device from the second charging function network element, to perform charging processing on the terminal device. Because the first charging function network element obtains information about the second charging function network element in advance, when determining to obtain the user data of the terminal device from the second charging function network element, the first charging function network element may directly send the charging request message to the second charging function network element, so that a delay can be reduced.

With reference to the first aspect, in some implementations of the first aspect, the method further includes: The first charging function network element sends second information to at least one candidate charging function network element of the terminal device, where the second information indicates that the first charging function network element is a network element that currently provides the charging service for the terminal device, and the second information includes the identifier of the terminal device and address information of the first charging function network element.

Based on the foregoing solution, after becoming a charging function network element of the terminal device, the first charging function network element may indicate, to the at least one candidate charging function network element of the terminal device, that the first charging function network element is the network element that currently provides the charging service for the terminal device. In this case, when the serving charging function network element of the terminal device is switched from the first charging function network element to another candidate charging function network element, the new serving charging function network element may directly obtain the user data of the terminal device from the first charging function network element, so that the delay can be reduced.

With reference to the first aspect, in some implementations of the first aspect, before the first charging function network element sends the data obtaining request message to the second charging function network element, the method further includes: The first charging function network element sends a query request message to a network repository function network element, where the query request message includes an identifier of the terminal device, and the query request message is for querying for address information of a network element that currently provides the charging service for the terminal device. The first charging function network element receives address information of the second charging function network element from the network repository function network element. That the first charging function network element sends a data obtaining request message to the second charging function network element includes: The first charging function network element sends the data obtaining request message to the second charging function network element based on the address information of the second charging function network element.

Based on the foregoing solution, the first charging function network element may query the network repository function network element for the address information of the second charging function network element, so that the first charging function network element can obtain the user data of the terminal device from the second charging function network element, thereby performing charging processing on the terminal device based on the user data of the terminal device. This avoids cross-area transmission, to a visited charging function network element, of the large amount of charging data generated in the charging process, to save the network resource and reduce the operation costs.

With reference to the first aspect, in some implementations of the first aspect, after the first charging function network element performs charging processing on the terminal device based on the user data of the terminal device, the method further includes: The first charging function network element sends third information to the network repository function network element, where the third information indicates that the first charging function network element is a network element that currently provides the charging service for the terminal device, and the third information includes the identifier of the terminal device and address information of the first charging function network element.

Based on the foregoing solution, after becoming a charging function network element of the terminal device, the first charging function network element may indicate, to the network repository function network element, that the first charging function network element is the network element that currently provides the charging service for the terminal device. In this case, when the serving charging function network element of the terminal device is switched from the first charging function network element to another candidate charging function network element, the new charging service function network element may query the network repository function network element for the address information of the first charging function network element, and obtain the user data of the terminal device from the first charging function network element, to perform charging processing on the terminal device.

With reference to the first aspect, in some implementations of the first aspect, the method further includes: The first charging function network element obtains address information of the second charging function network element from the charging request message. That the first charging function network element sends a data obtaining request message to the second charging function network element includes: The first charging function network element sends the data obtaining request message to the second charging function network element based on the address information of the second charging function network element.

Based on the foregoing solution, the charging trigger function network element may further include the address information of the second charging function network element in the charging request message. In this case, the first charging function network element may directly obtain the address information of the second charging function network element from the charging request message. Therefore, when determining to obtain the user data of the terminal device from the second charging function network element, the first charging function network element may directly send the charging request message to the second charging function network element, so that a delay can be reduced.

With reference to the first aspect, in some implementations of the first aspect, before the first charging function network element receives the user data from the second charging function network element, the method further includes: The first charging function network element sends a first charging response message to the charging trigger function network element, where the first charging response message indicates the charging trigger function network element to bypass a service of the terminal device.

Based on the foregoing solution, before the user data migrates, the first charging function network element sends the first charging response message to the charging trigger function network element, so that the charging trigger function network element can bypass the service of the terminal device based on the first charging response message. This can avoid a problem, for example, a high service processing delay of the terminal device or timeout of processing of the charging request message, caused by the migration of the user data.

With reference to the first aspect, in some implementations of the first aspect, after the first charging function network element performs charging processing on the terminal device based on the user data of the terminal device, the method further includes: The first charging function network element sends a second charging response message to the charging trigger function network element, where the second charging response message includes a processing result of performing charging processing on the terminal device by the first charging function network element.

Based on the foregoing solution, after performing charging processing on the terminal device, the first charging function network element may send the charging processing result to the charging trigger function network element, so that the charging trigger function network element processes the service of the terminal device based on the charging result.

With reference to the first aspect, in some implementations of the first aspect, after the first charging function network element receives the user data from the second charging function network element, the method further includes: The first charging function network element sends indication information to the charging trigger function network element, where the indication information indicates to re-request to charge the terminal device. The first charging function network element receives a charging request message from the charging trigger function network element again, where the charging request message is for requesting to charge the terminal device.

Based on the foregoing solution, if the first charging function network element returns a temporary response message (namely, the first charging response message) to the charging trigger function network element, the first charging function network element may indicate the charging trigger function network element to initiate a charging request again, so that the first charging function network element can perform charging processing on the terminal device based on the request of the charging trigger function network element.

With reference to the first aspect, in some implementations of the first aspect, the user data is data that is in data associated with the terminal device and that is for performing charging processing on the terminal device. After the first charging function network element performs charging processing on the terminal device based on the user data of the terminal device, the method further includes: The first charging function network element receives, from the second charging function network element, data other than the user data in the data associated with the terminal device.

In correspondence to a possible implementation in the foregoing solution, the second charging function network element first enables a part of data for charging to migrate to the first charging function network element, and then enables, after the first charging function network element performs charging processing, remaining data to migrate. This can shorten duration of the data migration, thereby reducing a service delay of the terminal device and a processing delay of the charging request message.

In correspondence to another possible implementation in the foregoing solution, when the terminal device performs session migration in session and service continuity mode 3, if the second charging function network element generates new user data after sending the user data to the terminal device, the second charging function network element may send the new user data (corresponding to the data other than the user data) to the first charging function network element, so that the first charging function network element updates the user data of the terminal device, to avoid a problem caused by not updating the user data, for example, a problem that traffic used by a user exceeds traffic in a package because the user data is not updated.

With reference to the first aspect, in some implementations of the first aspect, before the first charging function network element receives the charging request message from the charging trigger function network element, the method further includes: The first charging function network element receives the user data from the second charging function network element. The first charging function network element stores the user data.

Based on the foregoing solution, after performing charging processing on the terminal device, the second charging function network element may send, to the first charging function network element, user data obtained through the charging processing. In other words, the first charging function network element obtains the user data of the terminal device in advance. In this case, when determining to perform charging processing on the terminal device, the first charging function network element may directly perform charging processing on the terminal device based on the user data obtained in advance, and does not need to temporarily enable the user data to migrate, so that a delay can be reduced, and this avoids a problem, for example, a high service processing delay of the terminal device or timeout of processing of the charging request message, caused by the migration of the user data.

With reference to the first aspect, in some implementations of the first aspect, after the first charging function network element performs charging processing on the terminal device based on the user data of the terminal device, the method further includes: The first charging function network element sends a charging result to at least one candidate charging function network element of the terminal device, where the charging result is data obtained by performing charging processing on the terminal device by the first charging function network element.

Based on the foregoing solution, after performing charging processing on the terminal device, the first charging function network element may send the charging result to the candidate charging function network element of the terminal device. In this case, when a serving charging function network element of the terminal device is switched from the first charging function network element to another candidate charging function network element, the new charging service function network element may directly perform charging processing on the terminal device based on the user data obtained in advance, and does not need to temporarily enable the user data to migrate, so that the delay can be reduced, and this avoids the problem, for example, the high service processing delay of the terminal device or the timeout of the processing of the charging request message, caused by the migration of the user data.

According to a second aspect, a charging method is provided. The method may be performed by a charging trigger function network element, or may be performed by a component (for example, a chip or a circuit) of the charging trigger function network element. For ease of description, an example in which the charging trigger function network element performs the method is used for description herein.

The method includes: The charging trigger function network element obtains address information of a first charging function network element based on information about the charging trigger function network element and/or location information of a terminal device. The charging trigger function network element sends a charging request message to the first charging function network element based on the address information, where the charging request message is for requesting the first charging function network element to charge the terminal device.

Based on the foregoing solution, the charging trigger function network element requests the first charging function network element corresponding to the information about the charging trigger function network element and/or the location information of the terminal device to perform charging processing on the terminal device. That is, the charging trigger function network element triggers a charging function network element nearest to the terminal device to perform charging processing on the terminal device. In this way, cross-area transmission of a large amount of charging data generated in a charging process can be reduced, to save a network resource and reduce operation costs.

With reference to the second aspect, in some implementations of the second aspect, that a charging trigger function network element obtains address information of a first charging function network element based on information about the charging trigger function network element and/or location information of a terminal device includes: The charging trigger function network element sends a query request message to a network repository function network element, where the query request message is for requesting to obtain address information of a candidate charging function network element configured to perform charging processing on the terminal device, and the query request message includes the location information of the terminal device and/or the information about the charging trigger function network element. The charging trigger function network element receives the address information of the first charging function network element from the repository function network element.

Based on the foregoing solution, the charging trigger function network element may query, via the network repository function network element, for the address information of the first charging function network element corresponding to the information about the charging trigger function network element and/or the location information of the terminal device, to trigger the first charging function network element to perform charging processing on the terminal device. In this way, the cross-area transmission of the large amount of charging data generated in the charging process can be reduced, to save the network resource and reduce the operation costs.

With reference to the second aspect, in some implementations of the second aspect, that a charging trigger function network element obtains address information of a first charging function network element based on information about the charging trigger function network element and/or location information of a terminal device includes: The charging trigger function network element determines, in local configuration information based on the location information of the terminal device and/or the information about the charging trigger function network element, the address information of the first charging function network element corresponding to the location information of the terminal device and/or the information about the charging trigger function network element.

Based on the foregoing solution, if the charging trigger function network element is preconfigured with the address information of the first charging function network element corresponding to the information about the charging trigger function network element and/or the location information of the terminal device, the charging trigger function network element may directly obtain the address information of the first charging function network element from the local configuration information, to trigger the first charging function network element to perform charging processing on the terminal device. In this way, the cross-area transmission of the large amount of charging data generated in the charging process can be reduced, to save the network resource and reduce the operation costs.

With reference to the second aspect, in some implementations of the second aspect, the charging request message includes address information of a second charging function network element, and the second charging function network element is a network element that provides a charging service for the terminal device before the charging function network element.

Based on the foregoing solution, the charging trigger function network element may include the address information of the second charging function network element in the charging request message. In this way, the first charging function network element can directly obtain the address information of the second charging function network element from the charging request message, without obtaining the address information of the second charging function network element by using another procedure, so that a delay can be reduced.

With reference to the second aspect, in some implementations of the second aspect, the method further includes: The charging trigger function network element receives a first charging response message from the first charging function network element, where the first charging response message indicates the charging trigger function network element to bypass a service of the terminal device. The charging trigger function network element bypasses the service of the terminal device based on the first charging response message.

Based on the foregoing solution, before user data migrates, the first charging function network element sends the first charging response message to the charging trigger function network element, so that the charging trigger function network element can bypass the service of the terminal device based on the first charging response message, to avoid a problem, for example, a high service processing delay of the terminal device or timeout of processing of the charging request message, caused by the migration of the user data.

With reference to the second aspect, in some implementations of the second aspect, the method further includes: The charging trigger function network element receives a second charging response message from the first charging function network element, where the second charging response message includes a processing result of performing charging processing on the terminal device by the first charging function network element.

Based on the foregoing solution, after performing charging processing on the terminal device, the first charging function network element may send the charging processing result to the charging trigger function network element, so that the charging trigger function network element processes the service of the terminal device based on the charging result.

With reference to the second aspect, in some implementations of the second aspect, the method further includes: The charging trigger function network element receives indication information from the first charging function network element, where the indication information indicates to re-request to charge the terminal device. The charging trigger function network element sends a charging request message to the first charging function network element again based on the indication information, where the charging request message is for requesting to charge the terminal device.

Based on the foregoing solution, if the first charging function network element returns a temporary response message (namely, the first charging response message) to the charging trigger function network element, the first charging function network element may indicate the charging trigger function network element to initiate a charging request again, so that the first charging function network element can perform charging processing on the terminal device based on the request of the charging trigger function network element.

According to a third aspect, a charging method is provided. The method includes: A charging trigger function network element sends a charging request message to a first charging function network element, where the charging request message is for requesting to charge a terminal device. The first charging function network element receives the charging request message from the charging trigger function network element. The first charging function network element performs charging processing on the terminal device based on user data of the terminal device, where the user data is received by the first charging function network element from a second charging function network element, and the second charging function network element is a network element that provides a charging service for the terminal device before the first charging function network element.

With reference to the third aspect, in some implementations of the third aspect, the method further includes: The charging trigger function network element obtains address information of the first charging function network element based on information about the charging trigger function network element and/or location information of the terminal device. That a charging trigger function network element sends a charging request message to a first charging function network element includes: The charging trigger function network element sends the charging request message to the first charging function network element based on the address information.

With reference to the third aspect, in some implementations of the third aspect, that the charging trigger function network element obtains address information of the first charging function network element based on information about the charging trigger function network element and/or location information of the terminal device includes: The charging trigger function network element sends a query request message to a network repository function network element, where the query request message is for requesting to obtain address information of a candidate charging function network element configured to perform charging processing on the terminal device, and the query request message includes the location information of the terminal device and/or the information about the charging trigger function network element. The network repository function network element receives the query request message from the charging trigger function network element. The network repository function network element determines the address information of the first charging function network element corresponding to the location information of the terminal device and/or the information about the charging trigger function network element. The network repository function network element sends the address information of the first charging function network element to the charging trigger function network element. The charging trigger function network element receives the address information of the first charging function network element from the repository function network element.

With reference to the third aspect, in some implementations of the third aspect, that the charging trigger function network element obtains address information of the first charging function network element based on information about the charging trigger function network element and/or location information of the terminal device includes: The charging trigger function network element determines, in local configuration information based on the location information of the terminal device and/or the information about the charging trigger function network element, the address information of the first charging function network element corresponding to the location information of the terminal device and/or the information about the charging trigger function network element.

With reference to the third aspect, in some implementations of the third aspect, the method further includes: The first charging function network element determines to obtain the user data of the terminal device from the second charging function network element. The first charging function network element sends a data obtaining request message to the second charging function network element, where the data obtaining request message is for requesting to obtain the user data of the terminal device, and the data obtaining request message includes an identifier of the terminal device. The second charging function network element receives the data obtaining request message from the first charging function network element. The second charging function network element determines the user data of the terminal device based on the identifier of the terminal device. The second charging function network element sends the user data to the first charging function network element. The first charging function network element receives the user data from the second charging function network element.

With reference to the third aspect, in some implementations of the third aspect, before the first charging function network element receives the charging request message from the charging trigger function network element, the method further includes: The second charging function network element sends first information to at least one candidate charging function network element of the terminal device, where the first information indicates that the second charging function network element is a network element that currently provides the charging service for the terminal device, and the first information includes address information of the second charging function network element. The first charging function network element receives the first information from the second charging function network element. The first charging function network element stores the address information of the second charging function network element and the identifier of the terminal device. Before the first charging function network element sends the data obtaining request message to the second charging function network element, the method further includes: The first charging function network element obtains the address information of the second charging function network element from local storage based on the identifier of the terminal device.

With reference to the third aspect, in some implementations of the third aspect, before the first charging function network element sends the data obtaining request message to the second charging function network element, the method further includes: The first charging function network element sends a query request message to the network repository function network element, where the query request message includes the identifier of the terminal device, and the query request message is for querying for address information of a network element that currently provides the charging service for the terminal device. The network repository function network element determines address information of the second charging function network element based on the identifier of the terminal device. The network repository function network element sends the address information of the second charging function network element to the first charging function network element. The first charging function network element receives the address information of the second charging function network element from the network repository function network element.

With reference to the third aspect, in some implementations of the third aspect, after the first charging function network element performs charging processing on the terminal device based on the user data of the terminal device, the method further includes: The first charging function network element sends third information to the network repository function network element, where the third information indicates that the first charging function network element is a network element that currently provides the charging service for the terminal device, and the third information includes the identifier of the terminal device and the address information of the first charging function network element. The network repository function network element receives the third information from the first charging function network element. The network repository function network element records, based on the third information, that the first charging function network element is the network element that currently provides the charging service for the terminal device.

With reference to the third aspect, in some implementations of the third aspect, before the first charging function network element receives the user data from the second charging function network element, the method further includes: The first charging function network element sends a first charging response message to the charging trigger function network element, where the first charging response message indicates the charging trigger function network element to bypass a service of the terminal device. The charging trigger function network element receives the first charging response message. The charging trigger function network element bypasses the service of the terminal device based on the first charging response message.

With reference to the third aspect, in some implementations of the third aspect, after the first charging function network element performs charging processing on the terminal device based on the user data of the terminal device, the method further includes: The first charging function network element sends a second charging response message to the charging trigger function network element, where the second charging response message includes a processing result of performing charging processing on the terminal device by the first charging function network element. The charging trigger function network element receives the second charging response message from the first charging function network element.

With reference to the third aspect, in some implementations of the third aspect, after the first charging function network element receives the user data from the second charging function network element, the method further includes: The first charging function network element sends indication information to the charging trigger function network element, where the indication information indicates to re-request to charge the terminal device. The charging trigger function network element receives the indication information from the first charging function network element. The charging trigger function network element sends a charging request message to the first charging trigger function network element again based on the indication information, where the charging request message is for requesting to charge the terminal device. The first charging function network element receives the charging request message from the charging trigger function network element again.

With reference to the third aspect, in some implementations of the third aspect, the user data is data needed for performing charging processing. After the first charging function network element performs charging processing on the terminal device based on the user data of the terminal device, the method further includes: The second charging trigger function network element sends, to the first charging trigger function network element, data other than the user data in user data of the terminal device. The first charging function network element receives the data from the second charging function network element.

With reference to the third aspect, in some implementations of the third aspect, before the first charging function network element receives the charging request message from the charging trigger function network element, the method further includes: The second charging function network element sends the user data to the first charging function network element. The first charging function network element receives the user data from the second charging function network element. The first charging function network element stores the user data.

With reference to the third aspect, in some implementations of the third aspect, after the first charging function network element receives the charging request message from the charging trigger function network element, the method further includes: The first charging function network element sends a charging result to at least one candidate charging function network element of the terminal device, where the charging result is data obtained by performing charging processing on the terminal device by the first charging function network element. The second charging function network element receives the charging result from the first charging function network element.

According to a fourth aspect, a charging apparatus is provided. The charging apparatus includes: a transceiver module, configured to receive a charging request message from a charging trigger function network element, where the charging request message is for requesting to charge a terminal device; and a processing module, configured to perform charging processing on the terminal device based on user data of the terminal device, where the user data is received by the first charging function network element from a second charging function network element, and the second charging function network element is a network element that provides a charging service for the terminal device before the charging apparatus.

With reference to the fourth aspect, in some implementations of the fourth aspect, the processing module is further configured to determine to obtain the user data of the terminal device from the second charging function network element. The transceiver module is further configured to: send a data obtaining request message to the second charging function network element, where the data obtaining request message is for requesting to obtain the user data of the terminal device; and receive the user data from the second charging function network element.

With reference to the fourth aspect, in some implementations of the fourth aspect, the transceiver module is further configured to receive first information from the second charging function network element, where the first information indicates that the second charging function network element is a network element that currently provides the charging service for the terminal device, and the first information includes address information of the second charging function network element. The processing module is further configured to store the address information of the second charging function network element and an identifier of the terminal device. The processing module is further configured to obtain the address information of the second charging function network element from local storage based on the identifier of the terminal device.

With reference to the fourth aspect, in some implementations of the fourth aspect, the transceiver module is further configured to send second information to at least one candidate charging function network element of the terminal device, where the second information indicates that the first charging function network element is a network element that currently provides the charging service for the terminal device, and the second information includes the identifier of the terminal device and address information of the first charging function network element.

With reference to the fourth aspect, in some implementations of the fourth aspect, the transceiver module is further configured to: send a query request message to a network repository function network element, where the query request message includes an identifier of the terminal device, and the query request message is for querying for address information of a network element that currently provides the charging service for the terminal device; and receive address information of the second charging function network element from the network repository function network element.

With reference to the fourth aspect, in some implementations of the fourth aspect, the transceiver module is further configured to send third information to the network repository function network element, where the third information indicates that the first charging function network element is a network element that currently provides the charging service for the terminal device, and the third information includes the identifier of the terminal device and address information of the first charging function network element.

With reference to the fourth aspect, in some implementations of the fourth aspect, the transceiver module is specifically configured to obtain address information of the second charging function network element from the charging request message.

With reference to the fourth aspect, in some implementations of the fourth aspect, the transceiver module is further configured to send a first charging response message to the charging trigger function network element, where the first charging response message indicates the charging trigger function network element to bypass a service of the terminal device.

With reference to the fourth aspect, in some implementations of the fourth aspect, the transceiver module is further configured to send a second charging response message to the charging trigger function network element, where the second charging response message includes a processing result of performing charging processing on the terminal device by the first charging function network element.

With reference to the fourth aspect, in some implementations of the fourth aspect, the transceiver module is further configured to: send indication information to the charging trigger function network element, where the indication information indicates to re-request to charge the terminal device; and receive a charging request message from the charging trigger function network element again, where the charging request message is for requesting to charge the terminal device.

With reference to the fourth aspect, in some implementations of the fourth aspect, the user data is data needed for performing charging processing. The transceiver module is further configured to receive, from the second charging function network element, data other than the user data in user data of the terminal device.

With reference to the fourth aspect, in some implementations of the fourth aspect, the transceiver module is further configured to receive the user data from the second charging function network element. The processing module is further configured to store the user data.

With reference to the fourth aspect, in some implementations of the fourth aspect, the transceiver module is further configured to send a charging result to at least one candidate charging function network element of the terminal device, where the charging result is data obtained by performing charging processing on the terminal device by the first charging function network element.

According to a fifth aspect, a communication apparatus is provided. The apparatus includes: a processing module, configured to obtain address information of a first charging function network element based on information about the charging trigger function network element and/or location information of a terminal device; and a transceiver module, configured to send a charging request message to the first charging function network element, where the charging request message is for requesting the first charging function network element to charge the terminal device.

With reference to the fifth aspect, in some implementations of the fifth aspect, the transceiver module is specifically configured to: send a query request message to a network repository function network element, where the query request message is for requesting to obtain address information of a candidate charging function network element configured to perform charging processing on the terminal device, and the query request message includes the location information of the terminal device and/or the information about the charging trigger function network element; and receive the address information of the first charging function network element from the repository function network element.

With reference to the fifth aspect, in some implementations of the fifth aspect, the processing module is specifically configured to determine, in local configuration information based on the location information of the terminal device and/or the information about the charging trigger function network element, the address information of the first charging function network element corresponding to the location information of the terminal device and/or the information about the charging trigger function network element.

With reference to the fifth aspect, in some implementations of the fifth aspect, the charging request message includes address information of a second charging function network element, and the second charging function network element is a network element that provides a charging service for the terminal device before the charging function network element.

With reference to the fifth aspect, in some implementations of the fifth aspect, the transceiver module is further configured to receive a first charging response message from the first charging function network element, where the first charging response message indicates the charging trigger function network element to bypass a service of the terminal device. The processing module is further configured to bypass the service of the terminal device based on the first charging response message.

With reference to the fifth aspect, in some implementations of the fifth aspect, the transceiver module is further configured to receive a second charging response message from the first charging function network element, where the second charging response message includes a processing result of performing charging processing on the terminal device by the first charging function network element.

With reference to the fifth aspect, in some implementations of the fifth aspect, the transceiver module is further configured to receive indication information from the first charging function network element, where the indication information indicates to re-request to charge the terminal device. The processing module is further configured to send a charging request message to the first charging function network element again based on the indication information, where the charging request message is for requesting to charge the terminal device.

According to a sixth aspect, a communication apparatus is provided. The apparatus may be a charging function network element, or may be a chip used in the charging function network element. The apparatus has a function of implementing the method implemented in the first aspect. The function may be implemented by using hardware, or may be implemented by the hardware executing corresponding software. The hardware or the software includes one or more modules corresponding to the foregoing function.

According to a seventh aspect, a communication apparatus is provided. The apparatus may be a charging trigger function network element, or may be a chip used in the charging trigger function network element. The apparatus has a function of implementing the method implemented in the second aspect. The function may be implemented by using hardware, or may be implemented by the hardware executing corresponding software. The hardware or the software includes one or more modules corresponding to the foregoing function.

According to an eighth aspect, a communication apparatus is provided. The apparatus includes: a memory, configured to store a program; and a processor, configured to execute the program stored in the memory. When the program stored in the memory is executed, the processor is configured to perform any method provided in the first aspect or the second aspect.

According to a ninth aspect, this application provides a processor, configured to perform the methods provided in the foregoing aspects. In a process of performing the methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the foregoing information. After the foregoing information is output by the processor, other processing may further need to be performed on the foregoing information before the foregoing information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information before the foregoing information is input into the processor.

Based on the foregoing principle, for example, receiving the request message in the foregoing methods may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform the methods, or a processor, for example, a general-purpose processor, that executes computer instructions in a memory to perform the methods. The memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in this embodiment of this application.

According to a tenth aspect, a computer-readable storage medium is provided. The computer-readable medium stores program code to be executed by a device, and the program code is for performing any method provided in the first aspect or the second aspect.

According to an eleventh aspect, a computer program product including instructions is provided. When the computer program product runs on a computer, the computer is enabled to perform any method provided in the first aspect or the second aspect.

According to a twelfth aspect, a chip is provided. The chip includes a processor and a communication interface. The processor reads, through the communication interface, instructions stored in a memory, to perform any method provided in the first aspect or the second aspect.

Optionally, in an implementation, the chip may further include the memory. The memory stores the instructions, and the processor is configured to execute the instructions stored in the memory. When the instructions are executed, the processor is configured to perform any method provided in the first aspect or the second aspect.

According to a thirteenth aspect, a communication system is provided. The communication system includes a first charging function network element configured to perform the method shown in the first aspect and a charging trigger function network element configured to perform the method shown in the second aspect.

### BRIEF DESCRIPTION OF DRAWINGS

FIG. 1 is a diagram of a charging architecture 100 applicable to an embodiment of this application;
FIG. 2 is a diagram of a network architecture 200 applicable to an embodiment of this application;
(a) in FIG. 3 is a diagram of a system architecture 300(a) applicable to an embodiment of this application;

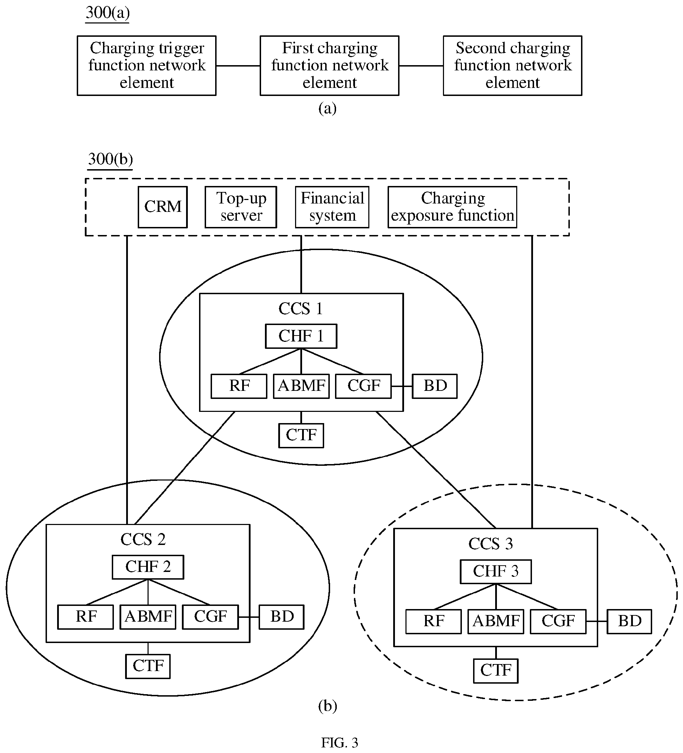

(b) in FIG. 3 is a diagram of a system architecture 300(b) applicable to an embodiment of this application;

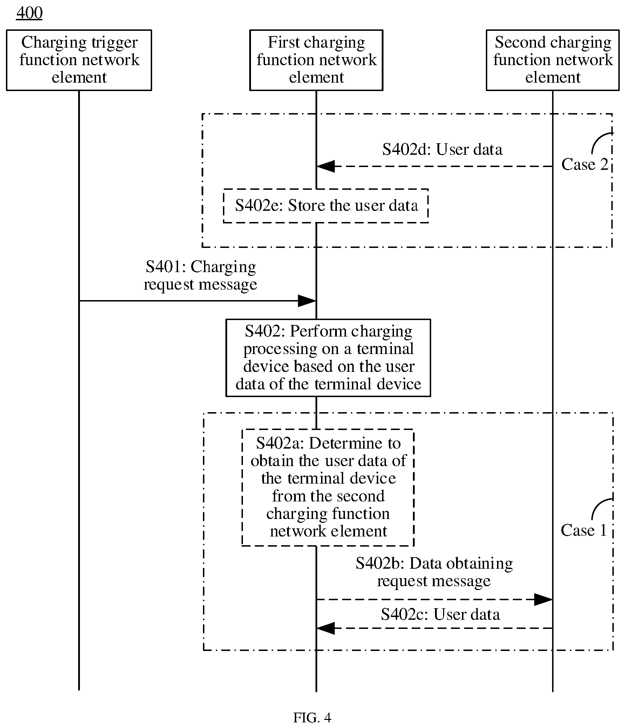

FIG. 4 is an example flowchart of a method 400 according to an embodiment of this application;

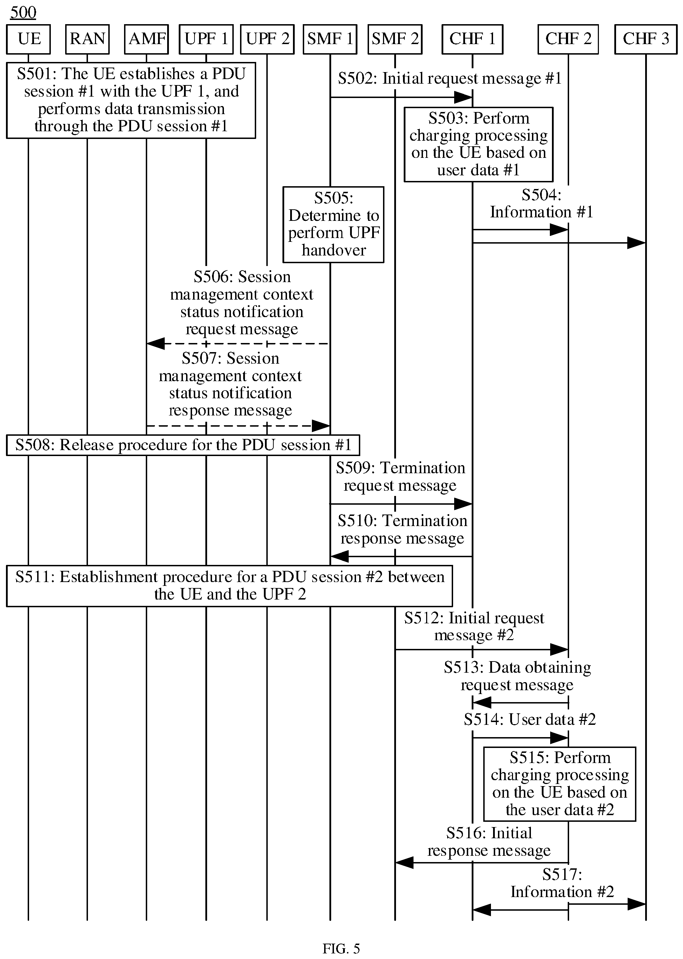

FIG. 5 is an example flowchart of a method 500 according to an embodiment of this application;

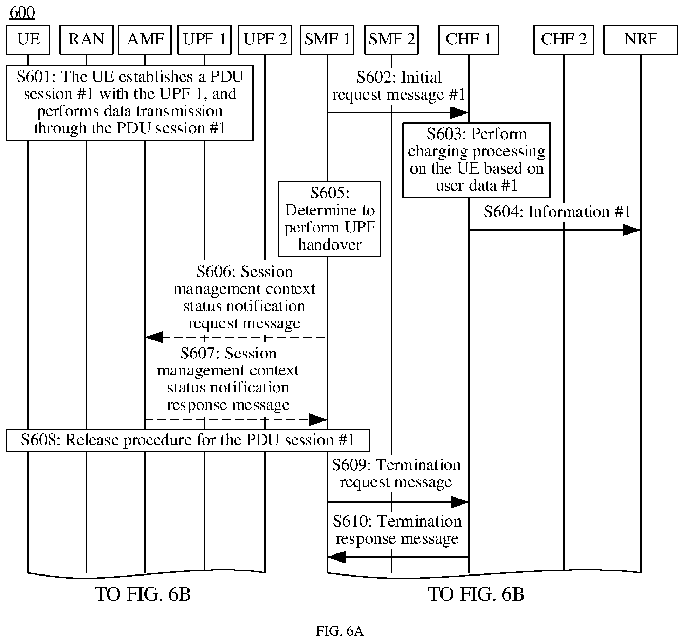

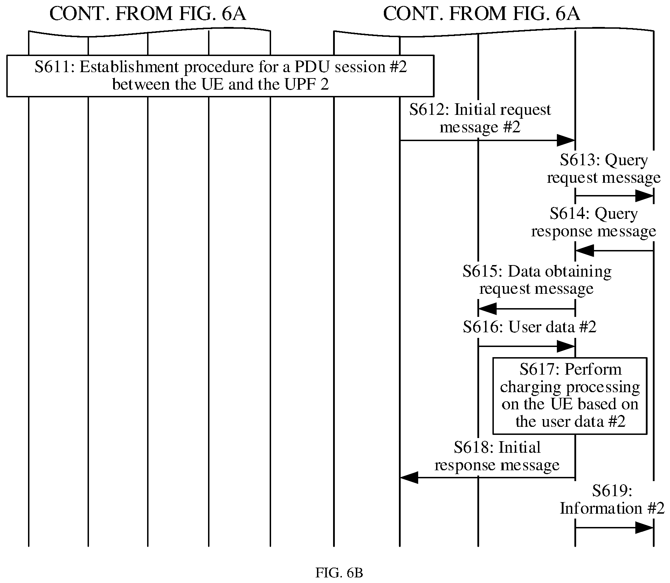

FIG. 6A and FIG. 6B are an example flowchart of a method 600 according to an embodiment of this application;

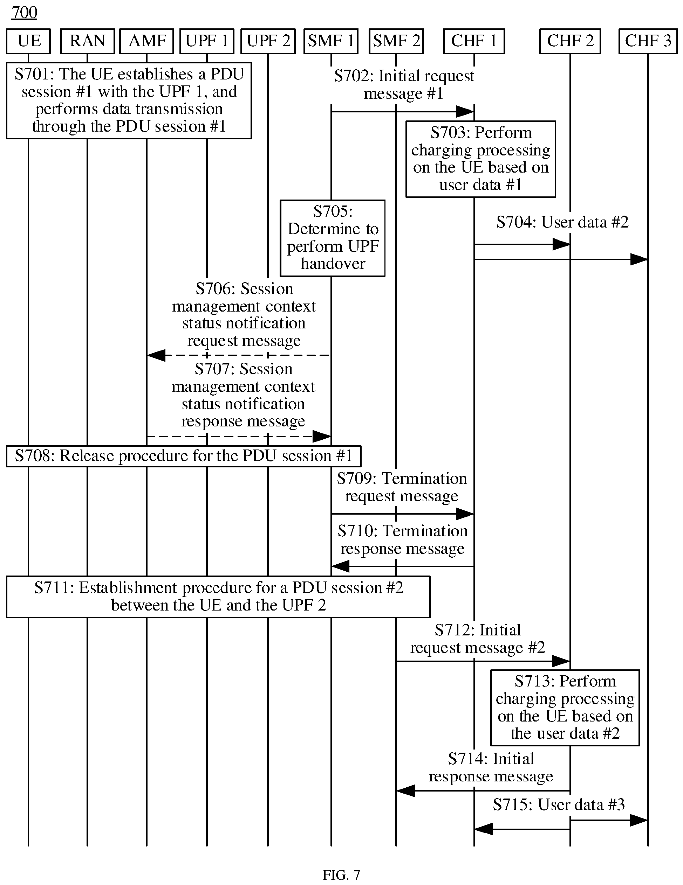

FIG. 7 is an example flowchart of a method 700 according to an embodiment of this application;

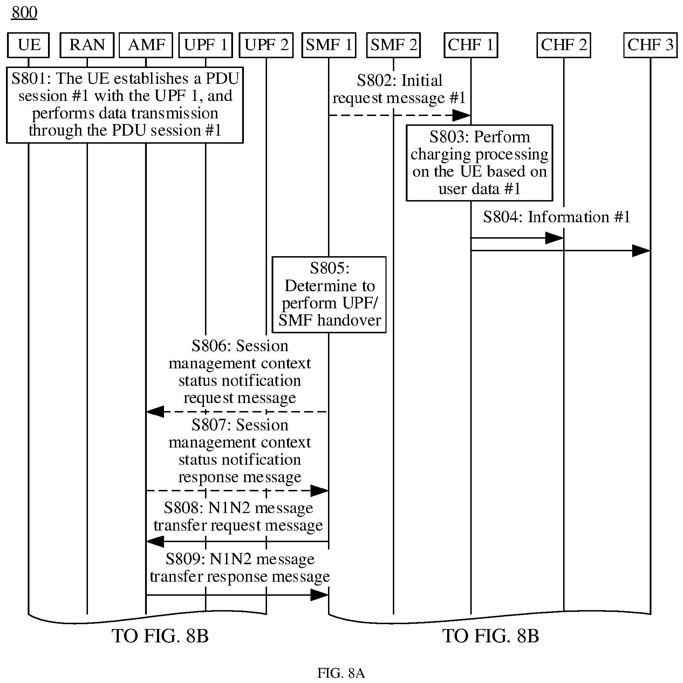

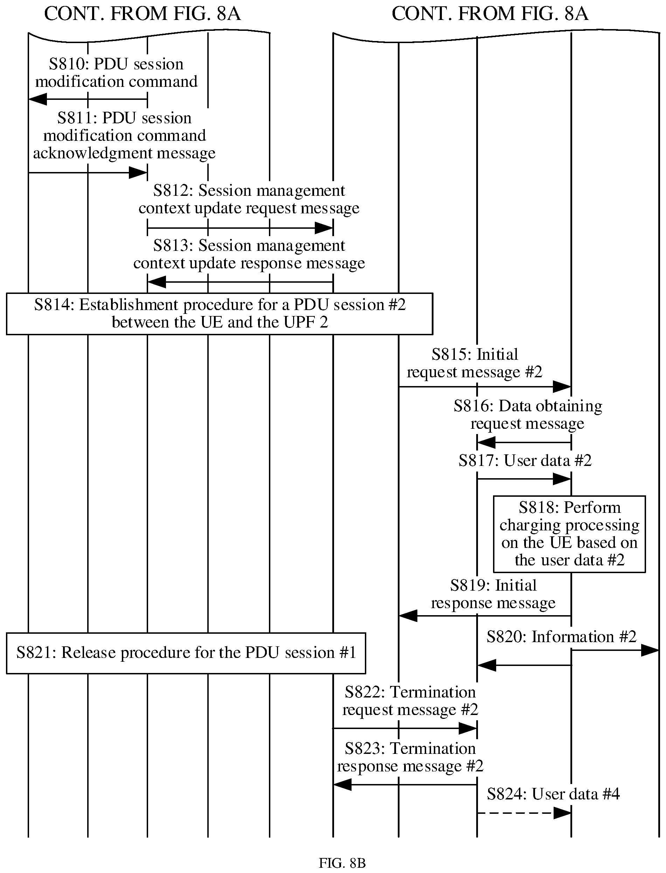

FIG. 8A and FIG. 8B are an example flowchart of a method 800 according to an embodiment of this application;

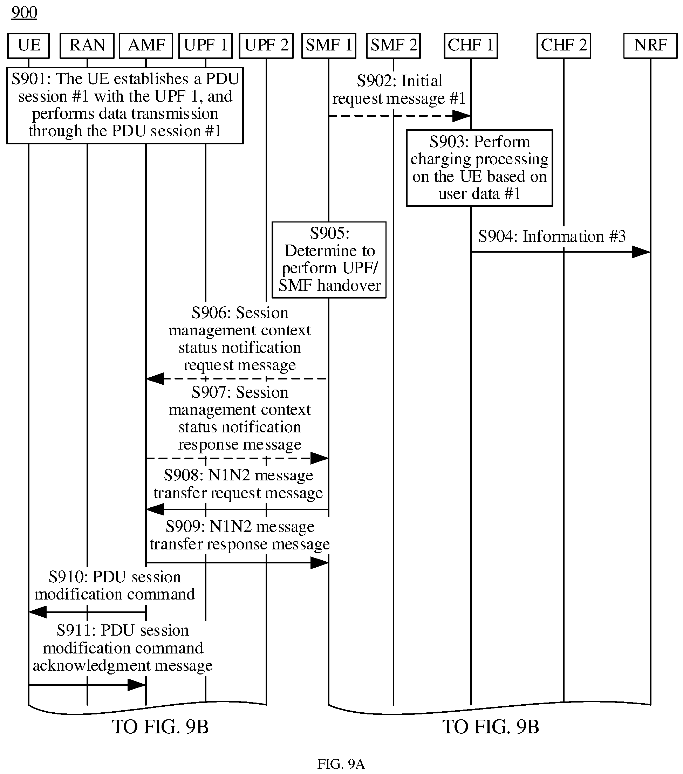

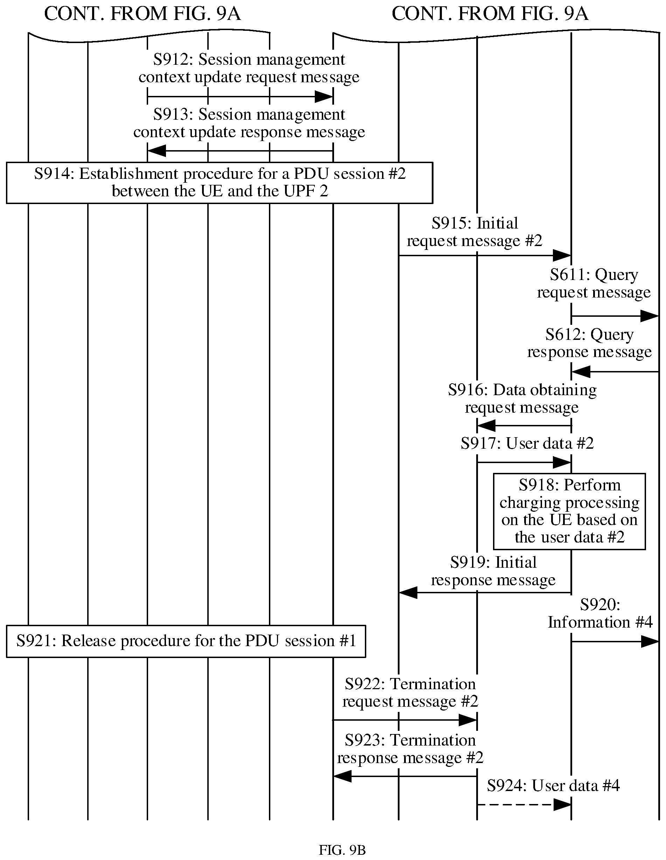

FIG. 9A and FIG. 9B are an example flowchart of a method 900 according to an embodiment of this application;

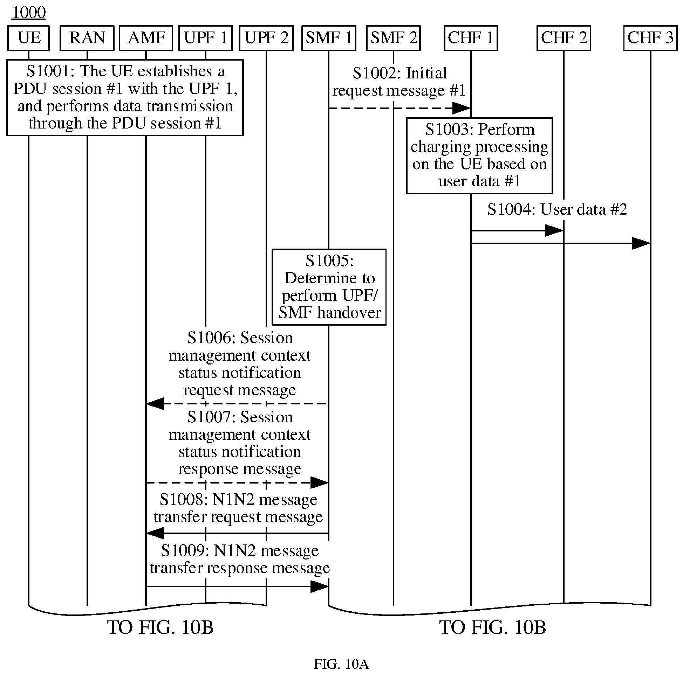

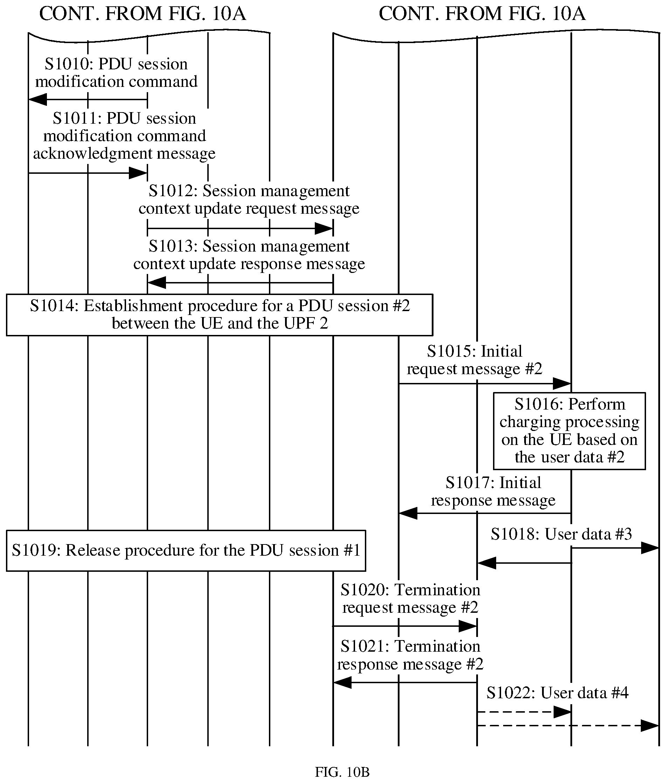

FIG. 10A and FIG. 10B are an example flowchart of a method 1000 according to an embodiment of this application;

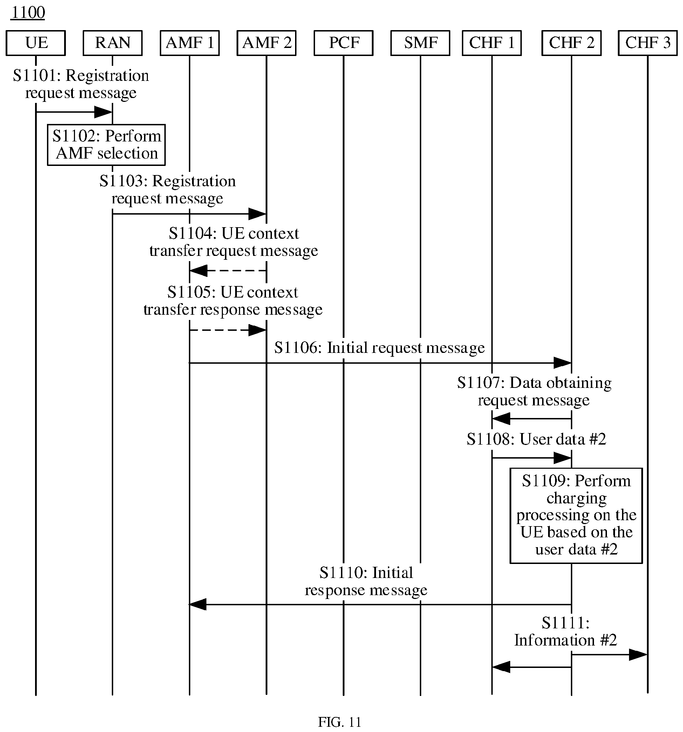

FIG. 11 is an example flowchart of a method 1100 according to an embodiment of this application;

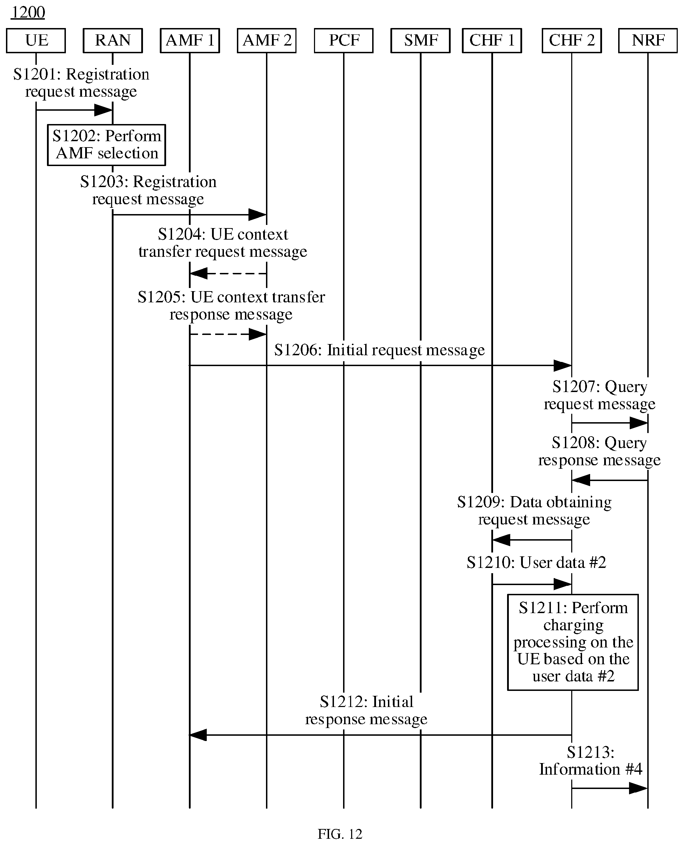

FIG. 12 is an example flowchart of a method 1200 according to an embodiment of this application;

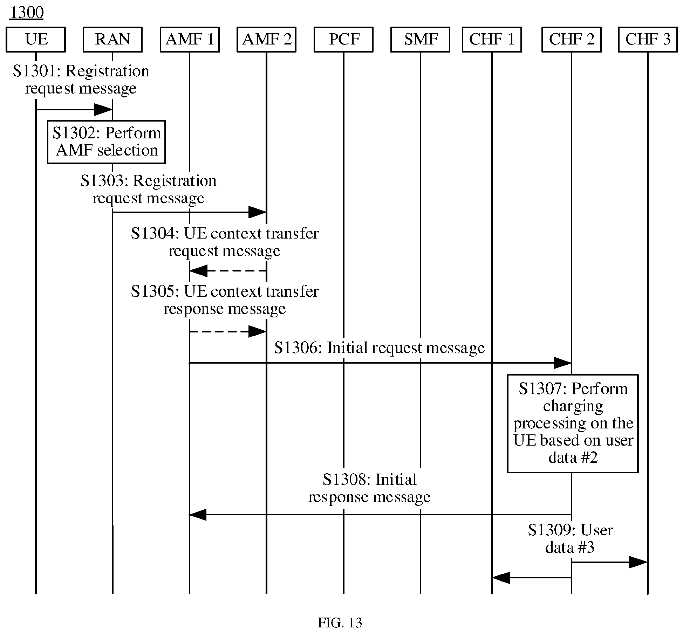

FIG. 13 is an example flowchart of a method 1300 according to an embodiment of this application;

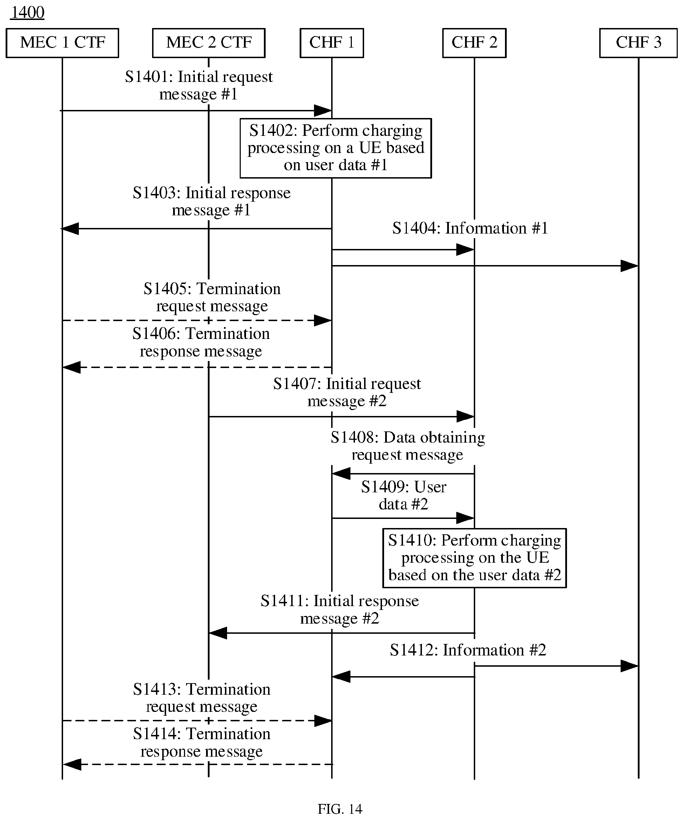

FIG. 14 is an example flowchart of a method 1400 according to an embodiment of this application;

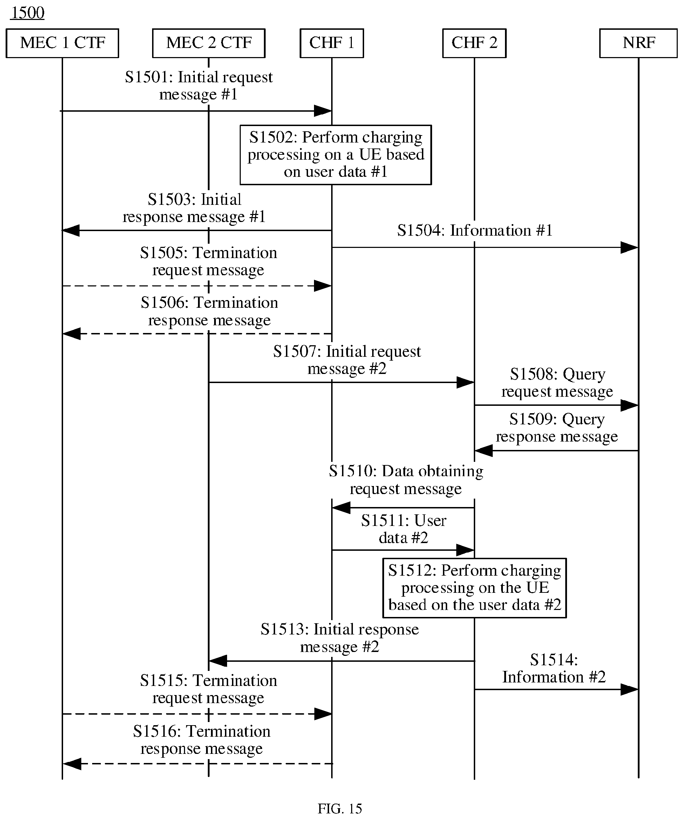

FIG. 15 is an example flowchart of a method 1500 according to an embodiment of this application;

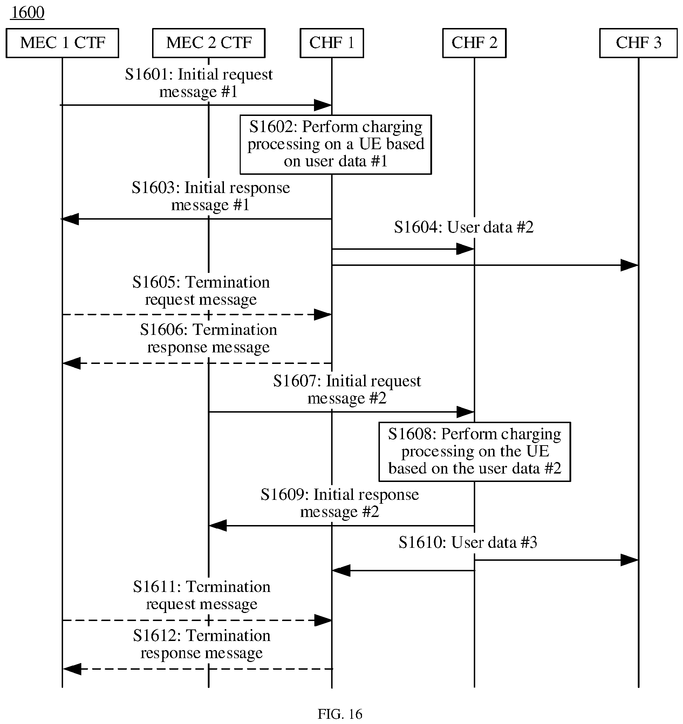

FIG. 16 is an example flowchart of a method 1600 according to an embodiment of this application;

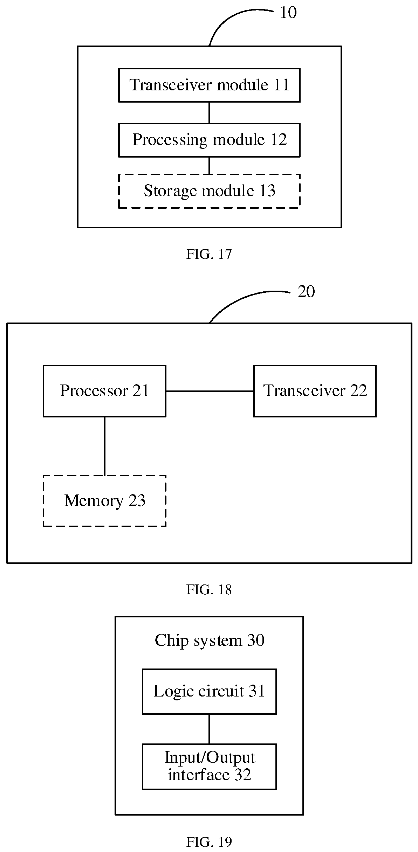

FIG. 17 is a schematic block diagram of a communication apparatus according to an embodiment of this application;
FIG. 18 is a schematic block diagram of a communication apparatus according to another embodiment of this application; and
FIG. 19 is a schematic block diagram of a communication apparatus according to still another embodiment of this application.

### DESCRIPTION OF EMBODIMENTS

To make the objectives, technical solutions, and advantages of this application clearer, the following further describes this application in detail with reference to the accompanying drawings.

For ease of understanding of embodiments of this application, the following several descriptions are provided first.
1. In the descriptions of embodiments of this application, unless otherwise specified, "a plurality of" means two or more.
2. In embodiments of this application, unless otherwise specified or there is a logic conflict, terms and/or descriptions in different embodiments are consistent and may be mutually referenced, and technical features in the different embodiments may be combined based on an internal logical relationship thereof, to form a new embodiment.
3. Various numerals in this application are for differentiation merely for ease of description, but are not for limiting the scope of this application. Sequence numbers in this application do not mean execution sequences. The execution sequences of the processes should be determined based on functions and internal logic of the processes. For example, in this specification, the claims, and the accompanying drawings of this application, the terms "first", "second", "third", "fourth", and various other ordinal number terms (if existent) are for distinguishing between similar objects, but do not necessarily indicate a specific order or sequence. It should be understood that the data termed in such a way is interchangeable in appropriate circumstances, so that embodiments described herein can be implemented in orders other than the order illustrated or described herein.
4. The terms "include" and "have" and any variant thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.
5. In this application, "indicate" may be understood as "enable", and "enable" may include "directly enable" and "indirectly enable". When a piece of information is described to enable A, the information may directly enable A or indirectly enable A, but it does not mean that the information definitely carries A.
   Information enabled by the information is referred to as to-be-enabled information. In a specific implementation process, the to-be-enabled information may be enabled in many manners, for example, but not limited to, directly enabling the to-be-enabled information, for example, enabling the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may alternatively be enabled through a pre-agreed (for example, specified in a protocol) sequence of all information, to reduce enabling overheads to some extent. In addition, a common part of all information may alternatively be identified and enabled in a unified manner, to reduce enabling overheads caused by enabling the same information separately.
6. In this application, "preconfigured" may include being predefined, for example, defined in a protocol. "Being predefined" may be implemented by prestoring corresponding code or a corresponding table in a device (for example, including network elements) or in another manner that may indicate related information. A specific implementation thereof is not limited in this application.
7. "Store" in embodiments of this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into an encoder, a processor, or a communication apparatus. A type of the memory may be a storage medium in any form. This is not limited in this application.
8. A "protocol" in embodiments of this application may be a standard protocol in the communication field, and may include, for example, a 4G/5G protocol, a new radio (new radio, NR) protocol, and a related protocol applied to a future communication system. This is not limited in this application.
9. Arrows or blocks shown by dashed lines in the diagrams of the accompanying drawings in this specification of this application indicate optional steps or optional modules.

In a 4G network, online charging and offline charging use different architectures. A user needs to select a payment type when opening an account. In a 5G network, to support development of a 5G service, the 3rd generation partnership project (3rd generation partnership project, 3GPP) introduces a charging architecture that converges the online charging and the offline charging.

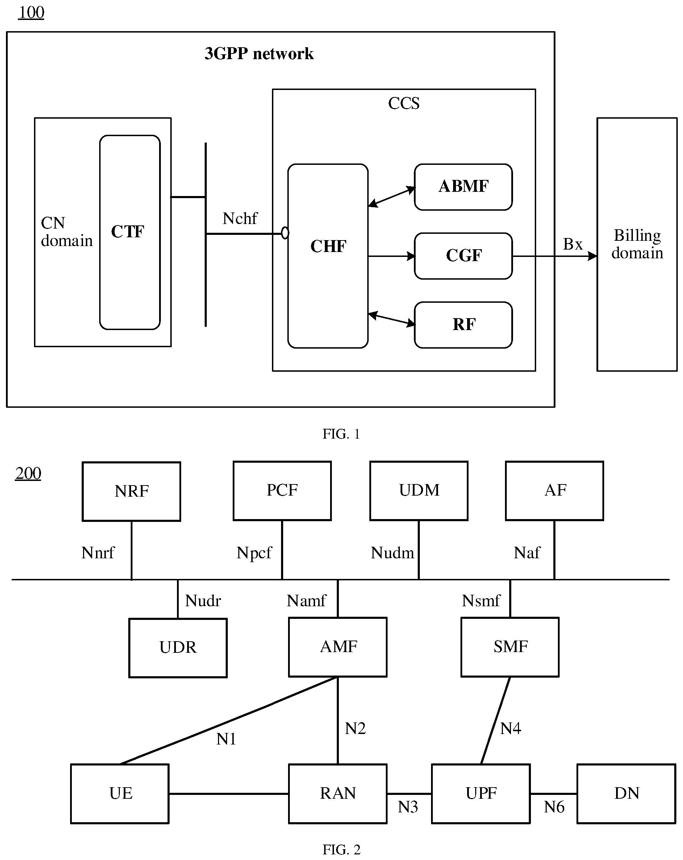

With reference to FIG. 1, the following describes, by using an example, a charging architecture 100 applicable to an embodiment of this application.

In the charging architecture 100, each network function (network function, NF) in a core network (core network, CN) domain is connected to a converged charging system (converged charging system, CCS) through a unified service-based interface Nchf. A charging trigger function (charging trigger function, CTF) in the CN domain may trigger, through the interface Nchf, the CCS to provide a charging service for a user.

The CTF is located in a service system, and is configured to perform service logic or service control (for example, control bypassing of a service based on a quota granted by the charging system). For example, the CTF provides a 5G core network with a session management function (session management function, SMF) network element of a data service, an internet protocol (internet protocol, IP) multimedia subsystem (IP multimedia subsystem, IMS) application server (application server, AS) of an IMS voice service, or an edge configuration server (edge configuration server, ECS), an edge enabler server (edge enabler server, EES), or an edge application server (edge application server, EAS) in a mobile edge computing (mobile edge computing, MEC) scenario.

The CCS is the converged charging system that converges online charging (online charging) and offline charging (offline charging). The CCS may provide only an online charging function (the CCS is essentially an online charging system), provide only an offline charging function (the CCS is essentially an offline charging system), or provide both the online charging function and the offline charging function (the CCS is essentially the converged charging system). The online charging refers to an authorization and charging process in which charging information is collected and whether there is a sufficient quota for communication is determined in real time in a session process. The offline charging refers to a process in which charging is performed by generating a call detail record file based on communication behavior.

The CCS includes a charging function (charging function, CHF), an account balance management function (account balance management function, ABMF), a rating function (rating function, RF), a charging gateway function (charging gateway function, CGF), and the like. The following briefly describes the functions in the CCS.
(1) CHF: The CHF may receive a charging request from the CTF through a service-based charging interface. The charging request carries quota application information, usage information, and the like of the CTF. The CHF may perform charging processing based on the received charging request and related information (for example, a user type, customer information, an account balance, a service trustlist/blocklist, an account balance change trend, and a remaining validity period of a package) of a user service, and send a charging processing result to the CTF, so that the CTF adjusts a charging operation for the user service.
(2) ABMF: The ABMF is configured to manage the account balance of the user, where the management includes account reservation, locking, deduction, and the like.
(3) RF: The RF is configured to determine a needed tariff, a needed price, or needed usage based on a service using request and user information. For example, the RF receives charging event information provided by an online charging function (online charging function, OCF), determines network resource usage of the OCF, and returns a rating result to the OCF.
(4) CGF: The CGF is configured to perform the following functions: receiving a CDR from a CDF in real time; CDR preprocessing; CDR verification, merging, and formatting; CDR error processing; persistently storing the call detail record; call detail record routing and filtering, that is, storing the call detail record in a separate file based on a filtering condition like a call detail record type, a call detail record parameter, or a source CDF; CDR file management such as file creation, a file opening/closing trigger, and file deletion; and transmitting the CDR file to a billing domain (billing domain, BD). It may be understood that each CCS has a matched BD, and the BD may perform billing processing on a UE based on the CDR file received from the CGF.

The technical solutions provided in this application may be applied to various communication systems, for example, a 5th generation (5th generation, 5G) communication system (which is also referred to as a new radio (new radio, NR) system), a 4th generation (4th generation, 4G) communication system (which is also referred to as a long term evolution (long term evolution, LTE) system), an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system.

The following uses the 5G system as an example to describe, with reference to FIG. 2, a diagram of a possible network architecture of the CN domain in the charging architecture 100 shown in FIG. 1. It may be understood that FIG. 2 is described by using only the 5G system as an example. However, this application is not limited thereto. This application may alternatively be applicable to another future network system.

As shown in FIG. 2, the network architecture is, for example, a 5G system (5th generation system, 5GS) defined in the 3rd generation partnership project (3rd Generation Partnership Project, 3GPP) protocol TS 23.501. The network architecture may be divided into two parts: an access network (access network, AN) and a core network (core network, CN). The access network may be for implementing a function related to radio access, and the core network includes a plurality of logical functional entities. The following briefly describes network elements or devices shown in FIG. 3.
1. A user equipment (user equipment, UE) may be referred to as a terminal device (terminal equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides a user with voice/data connectivity, for example, a handheld device or a vehicle-mounted device that has a wireless connection function. Currently, some examples of the terminal may be a mobile phone (mobile phone), a tablet computer (pad), a computer (for example, a laptop or a palmtop computer) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a 5G network, or a terminal device in a future evolved public land mobile network (public land mobile network, PLMN).

In addition, the terminal device may alternatively be a terminal device in an internet of things (Internet of things, IoT) system. IoT is an important component of future information technology development. A main technical feature of the IoT is to connect things to a network by using a communication technology, to implement a smart network for human-machine interconnection and thing-thing interconnection. An IoT technology may implement massive connections, deep coverage, and terminal power saving by using, for example, a narrow band (narrow band, NB) technology.

In addition, the terminal device may alternatively include an intelligent printer, a train detector, and the like, and main functions include collecting data (which is a function of some terminal devices), receiving control information and downlink data of a network device, sending an electromagnetic wave, and transmitting uplink data to the network device.

It should be understood that the user equipment may be any device that may access a network. The terminal device and an access network device may communicate with each other by using an air interface technology.

Optionally, the user equipment may serve as a base station. For example, the user equipment may serve as a scheduling entity, and provide a sidelink signal between user equipments in V2X, D2D, or the like. For example, a cellular phone and a car communicate with each other by using the sidelink signal. The cellular phone and a smart household device communicate with each other without relaying a communication signal by using the base station.

2. A (radio) access network ((radio) access network, (R)AN) device is configured to provide a network access function for an authorized user equipment in a specific area, and can use transmission tunnels of different quality of service based on a level of the user equipment, a service requirement, and the like.

The (R)AN can manage a radio resource, and provide an access service for the user equipment, to forward a control signal and user equipment data between the user equipment and the core network. The (R)AN may also be understood as a base station in a conventional network.

For example, the access network device in embodiments of this application may be any communication device with a wireless transceiver function and for communicating with the user equipment. The access network device includes but is not limited to an evolved NodeB (evolved NodeB, eNB), a gNB or a transmission point (TRP or TP) in the 5G system, for example, an NR system, or one antenna panel or a group of antenna panels (including a plurality of antenna panels) of a base station in the 5G system, or may be a network node that constitutes a gNB or a transmission point, for example, a baseband unit (BBU) or a distributed unit (distributed unit, DU).

In some deployment, the gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from the information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, and an AAU node. In addition, the CU may be classified as an access network device in the radio access network (radio access network, RAN), or the CU may be classified as an access network device in the core network (core network, CN). This is not limited in this application.

3. A user plane function (user plane function, UPF) network element is for packet routing and forwarding, quality of service (quality of service, QoS) handling for user plane data, and the like. For ease of description, in embodiments of this application, the user plane function network element is referred to as a "UPF" for short.

In a future communication system, a user plane network element may still be the UPF network element, or may have another name. This is not limited in this application.

4. An access and mobility management function (access and mobility management function, AMF) network element: The access and mobility management function network element is mainly configured to perform mobility management, access management, and the like, and may be configured to implement a function other than session management in an MME function, for example, an access authorization/authentication function. For ease of description, in embodiments of this application, the access and mobility management function network element is referred to as an "AMF" for short.

In a future communication system, an access and mobility management network element may still be the AMF, or may have another name. This is not limited in this application.

5. A session management function (session management function, SMF) network element is mainly for session management, assignment and management of an internet protocol (internet protocol, IP) address of a user equipment, selection and control of a user plane function, termination of interfaces toward policy control and charging functions, downlink data notification, and the like. For ease of description, in embodiments of this application, the session management function network element is referred to as an "SMF" for short.

The SMF is a type of session management network element. In a future communication system, the session management network element may still be the SMF, or may have another name. This is not limited in this application.

6. A policy control function (policy control function, PCF) network element is configured to: provide a unified policy framework for governing network behavior, provide policy rule information for a control plane function network element (for example, an AMF or an SMF), and so on.

In a future communication system, a policy control network element may still be the PCF network element, or may have another name. This is not limited in this application.

7. A network repository function (network repository function, NRF) network element mainly provides service registration, discovery, and authorization, and maintains available network function (network function, NF) instance information. For example, the NRF may be configured to store description information of an NF entity and description information of a service provided by the NF entity. In addition, the NRF may further implement on-demand configuration of a network function and a service and interconnection between NFs.

8. An application function (application function, AF) network element is configured to perform application-affected data routing, wirelessly access a network exposure function network element, interact with a policy framework for policy control, and so on. For ease of description, in embodiments of this application, the application function network element is referred to as an "AF" for short.

In a future communication system, the application function network element may still be the AF network element, or may have another name. This is not limited in this application.

9. A unified data management (unified data management, UDM) network element is configured to perform UE identifier processing, access authentication, registration, mobility management, and the like.

In a future communication system, the unified data management may still be the UDM network element, or may have another name. This is not limited in this application.

10. A data network (data network, DN) is a network outside an operator network. The operator network may access a plurality of DNs, and a plurality of services may be deployed on the DN, to provide a terminal device with a service like data and/or a voice. For example, the DN is a private network of a smart factory, a sensor installed in a workshop of the smart factory may be the terminal device, a control server of the sensor is deployed in the DN, and the control server may serve the sensor. The sensor may communicate with the control server, to obtain instructions of the control server, transmit collected sensor data to the control server based on the instructions, and so on. For another example, the DN is an internal office network of a company, a mobile phone or a computer of an employee of the company may be the terminal device, and the mobile phone or the computer of the employee may access information, a data resource, and the like in the internal office network of the company.

In the network architecture shown in FIG. 2, the network elements may communicate with each other through interfaces shown in the figure. As shown in the figure, the UE and the AMF may interact with each other through an N1 interface, and an interaction message may be referred to as, for example, an N1 message (N1 Message). The RAN and the AMF may interact with each other through an N2 interface, and the N2 interface may be for sending a non-access stratum (non-access stratum, NAS) message and the like. The RAN and the UPF may interact with each other through an N3 interface, and the N3 interface may be for communicating user plane data and the like. The SMF and the UPF may interact with each other through an N4 interface, and the N4 interface may be for communicating information such as tunnel identification information of an N3 connection, data buffering indication information, and a downlink data notification message. The UPF and the DN may interact with each other through an N6 interface, and the N6 interface may be for communicating user plane data and the like. A relationship between another interface and each network element is shown in FIG. 2. For brevity, details are not described one by one herein.

It may be understood that, in the network architecture shown in FIG. 2, an example in which the network elements communicate with each other through point-to-point interfaces is used for description. However, this application is not limited thereto. That is, the network elements may alternatively communicate with each other through other types of interfaces (for example, service-based interfaces).

To resolve the problem mentioned in the background, as shown in (a) in FIG. 3, this application provides a communication system 300(a). The system 300(a) includes a charging trigger function network element, a first charging function network element, and a second charging function network element.

In a possible example, the charging trigger function network element is configured to send a charging request message to the first charging function network element, where the charging request message is for requesting to charge a terminal device. The first charging function network element is configured to receive the charging request message from the charging trigger function network element. The first charging function network element is further configured to perform charging processing on the terminal device based on user data of the terminal device, where the user data is received by the first charging function network element from the second charging function network element, and the second charging function network element is a network element that provides a charging service for the terminal device before the first charging function network element.

For example, in the communication system provided in this embodiment of this application, after receiving the charging request message from the charging trigger function network element, the first charging function network element performs charging processing on the terminal device based on the user data obtained from the second charging function network element. In this way, cross-area transmission of a large amount of charging information generated in a charging process can be reduced. For example, a case in which the charging information generated in the charging process is transmitted to a home charging system can be avoided, so that a network resource can be saved, and operation costs can be reduced.

It should be understood that, for a specific interaction process between the network elements in (a) in FIG. 3, refer to a procedure of a method shown in FIG. 4. For a specific implementation solution, refer to detailed descriptions of the method 400. Details are not described herein again.

The communication system 300(a) shown in (a) in FIG. 3 may be used in the charging architecture 100 shown in FIG. 1. In this case, the charging function network elements in the communication system 300(a) may correspond to the CHF in FIG. 1, and the charging trigger function network element in the communication system 300(a) may correspond to the CTF in FIG. 1. It may be understood that the first charging function network element and the second charging function network element in the communication system 300(a) may correspond to CHFs in two different CCSs. In other words, the communication system 300(a) may include two or more CCS systems. With reference to (b) in FIG. 3, the following describes, by using an example, a system architecture 300(b) applicable to an embodiment of this application. As shown in FIG. 3, the system architecture 300 includes a CCS 1 and a CCS 2, and optionally, further includes a CCS 3. The CCS 1, the CCS 2, and the CCS 3 are all candidate CCSs (candidate CCSs, C-CCSs) of a UE. The candidate CCS of the UE is a CCS that may provide a charging service for the UE or a CCS that may become a serving CCS of the UE.

It may be understood that any one of the candidate CCSs may become the serving converged charging system (Serving CCS) of the UE, and the serving CCS of the UE is a CCS that currently provides the charging service for the UE. As the UE moves, the serving CCS of the UE may further be switched from one C-CCS to another C-CCS.

It is assumed that, in the network architecture 300, the CCS 1 is the serving CCS of the UE, and the CCS 2 is a CCS that provides the charging service for the UE before the CCS 1. In other words, the serving CCS of the UE is switched from the CCS 2 to the CCS 1. For ease of description, in this embodiment of this application, the serving CCS that currently provides the charging service for the UE is referred to as a new CSS, and a CSS that provides the charging service for the UE before the new CSS is referred to as an old CSS. That is, in this example, the CCS 1 is the new CCS, and the CCS 2 is the old CCS. It may be understood that, as a location of the UE is changed, the old CSS may become the new CSS, and the new CSS may also become the old CSS. In addition, both the new CSS and the old CSS are relative to a specific UE, and the old CSS may alternatively be a serving CCS of another UE currently.

The CCS 1 includes a CHF 1. The CHF 1 may be referred to as a serving charging function (Serving CHF) network element. The serving CHF is configured to maintain user data (including an account balance, package data, a call detail record, and the like) of the UE. The candidate CCS provides an interface between the candidate CCS and an external system (for example, a customer relationship management (customer relationship management, CRM) system, a top-up server, an accounting system, or charging capability exposure). Therefore, the external system may obtain the user data via the candidate CCS, and perform a related operation for the UE based on the user data.

It may be understood that a quantity of candidate CCSs of the UE is not limited in this application. In other words, in addition to the CCS 1 and the CCS 2, the UE may further have one or more other candidate CCSs, for example, the CCS 3. This is not limited in this application.

It may be understood that the network architecture applied to embodiments of this application is merely an example, and a network architecture applicable to embodiments of this application is not limited thereto. Any network architecture that can implement functions of the foregoing network elements is applicable to embodiments of this application. That is, the network architecture and the service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of the new service scenario, the technical solutions provided in embodiments of this application are also applicable to similar technical problems.

It may be further understood that the network elements or the devices listed in the foregoing network architecture are merely examples for description, and the network architecture applicable to this application may further include another network element or device. This is not limited in this application.

It may be further understood that the names of the foregoing network elements or devices are defined merely for distinguishing between different functions, and should not constitute any limitation on this application. This application does not exclude a possibility that another name is used in the 4G network, the 5G network, and another future network. For example, in a 6G network, some or all of the foregoing network elements may use a term in 4G/5G, or may use another name.

The communication device in embodiments of this application includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). An operating system may be any one or more computer operating systems that implement service processing through a process (Process), for example, a Linux operating system, a Unix operating system, an Android operating system, an iOS operating system, or a Windows operating system. The application layer includes applications such as a browser, an address book, text processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program and that is in the terminal device or the network device.

In addition, the aspects or features of embodiments of this application may be implemented by using the method or an apparatus, or may be implemented by using a product using standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel and various other media that can store, include, and/or carry instructions and/or data.

The following uses interaction between network elements as an example to describe in detail the communication method provided in embodiments of this application. It should be understood that, for terms and steps in embodiments of this application, reference may be made to each other. A specific operation method in a method embodiment in this application may also be applied to an apparatus embodiment or a system embodiment.

FIG. 4 is an example flowchart of a method 400 according to an embodiment of this application. In the method 400, a charging function network element (namely, a charging function network element that receives a charging request message from a charging trigger function network element) nearest to a terminal device serves as a serving charging function network element of the terminal device, and the serving charging function network element maintains user data of the terminal device. The following describes the method 400 by using an example with reference to steps in FIG. 4.

S401: The charging trigger function network element sends the charging request message to a first charging function network element. Accordingly, the first charging function network element receives the charging request message from the charging trigger function network element.

For example, after the terminal device is handed over to the charging trigger function network element because the terminal device moves, the terminal device triggers establishment of a service session between the terminal device and the charging trigger function network element. It may be understood that, in an online charging scenario, the terminal device triggers the establishment of the service session between the terminal device and the charging trigger function network element after terminating a service session between the terminal device and an old charging function network element. In an offline charging scenario, the terminal device directly triggers to establish the service session between the terminal device and the charging trigger function network element. The old charging trigger function network element herein is a network element that serves the terminal device before the charging trigger function network element. When receiving a service request for the terminal device, the charging trigger function network element sends the charging request message to the first charging function network element, where the charging request message is for requesting to perform charging processing on the terminal device. For example, when moving to a coverage area of a network in which the charging trigger function network element is located, the terminal device initiates a registration request or a protocol data unit session establishment request to the charging trigger function network element. After receiving the request from the terminal device, the charging trigger function network element sends the charging request message to the first charging function network element.

The following describes, by using examples, specific implementations in which the charging trigger function network element sends the charging request message to the first charging function network element.

In a possible implementation, the charging trigger function network element obtains address information of the first charging function network element based on information about the charging trigger function network element and/or location information of the terminal device, and then sends the charging request message to the first charging function network element based on the address information.

For example, the charging trigger function network element sends a query request message to a network repository function network element, where the query request message is for requesting to obtain address information of a candidate charging function network element configured to perform charging processing on the terminal device, and the query request message includes the location information of the terminal device and/or the information about the charging trigger function network element. After receiving the query request message from the charging trigger function network element, the network repository function network element queries for the address information of the candidate charging function network element corresponding to the location information of the terminal device and/or information about the charging function network element. Specifically, for example, the network repository function network element stores a correspondence, shown in Table 1, between a serving NF and address information of a charging function network element. In Table 1, "Serving NF ID" represents information about a serving NF (namely, the charging trigger function network element, or another network element that serves the terminal device) of the terminal device, "location" represents the location information of the terminal device, and "CHFInfo" represents the address information of the first charging function network element corresponding to the location information of the terminal device and/or the information about the charging trigger function network element.

**Table 1**

| Key 1 | Key 2 | Address information | Function |
|---|---|---|---|
| Serving NF ID | location | CHFInfo | For locating the charging function network element |

The network repository function network element queries, based on the location information of the terminal device and/or the information about the charging function network element that are/is carried in the query request message, for the first charging function network element corresponding to the location information of the terminal device and/or the information about the charging function network element, and then returns the address information of the first charging function network element to the charging trigger function network element.

In another possible implementation, the charging trigger function network element determines, in local configuration information based on location information of the terminal device and/or information about the charging trigger function network element, address information of the first charging function network element corresponding to the location information of the terminal device and/or the information about the charging trigger function network element, and then sends the charging request message to the first charging function network element based on the address information. It may be understood that the local configuration information may be preconfigured on the charging trigger function network element, or may be configured by another network element for the charging trigger function network element. This is not limited in this application.

Optionally, the charging trigger function network element may further include address information of a second charging function network element in the charging request message. The address information of the second charging function network element may be, for example, received by the charging trigger function network element from the terminal device or the old charging trigger function network element (namely, the charging trigger function network element that serves the terminal device before the charging trigger function network element). A specific manner is not limited in this application.

S402: The first charging function network element performs charging processing on the terminal device based on the user data of the terminal device.

For example, after receiving the charging request message from the charging trigger function network element, the first charging function network element charges the terminal device based on the user data of the terminal device. In other words, the first charging function network element processes the charging request message based on the user data of the terminal device. In other words, the first charging function network element becomes the serving charging function network element of the terminal device. For example, for online charging, the first charging function network element performs operations such as quota granting, rating, and account balance locking on the terminal device based on the user data; and for offline charging, the first charging function network element performs operations such as opening of a call detail record for recording, call detail record processing, and response returning on the terminal device based on the user data.

The user data is received by the first charging function network element from the second charging function network element. The user data herein includes data for charging the terminal device, for example, user account data (a user name, a user type, an account balance, a package, and rating information) and policy data (for example, a rating policy) that is applied to a user.

The second charging function network element is a network element that provides a charging service for the terminal device before the first charging function network element. In other words, in this embodiment, it is assumed that the serving charging function network element of the terminal device is switched from the second charging function network element to the first charging function network element.

Optionally, before S402, the first charging function network element obtains the user data of the terminal device.

For two possible cases (as described in the following case 1 and case 2), the following describes, by using examples, specific implementations in which the first charging function network element obtains the user data of the terminal device.

### Case 1:

Optionally, S402a: The first charging function network element determines to obtain the user data of the terminal device from the second charging function network element.

For example, after receiving the charging request message from the charging trigger function network element, the first charging function network element may determine whether the user data of the terminal device needs to be obtained from the second charging function network element. For example, when there is no user data of the terminal device in local storage, the first charging function network element determines to obtain the user data of the terminal device from the second charging function network element. For another example, when there is user data of the terminal device in local storage, but the first charging function network element determines that the user data in the local storage needs to be updated, the first charging function network element determines to obtain the user data of the terminal device from the second charging function network element. For example, if the first charging function network element determines that a charging function network element that provides a charging processing service for the terminal device last time is a charging function network element other than the first charging function network element, the first charging function network element considers that the user data in the local storage needs to be updated. In other words, the first charging function network element determines that the user data in the local storage is not latest user data of the terminal device. In this case, the first charging function network element determines to obtain the user data of the terminal device from the second charging function network element.

Optionally, S402b: The first charging function network element sends a data obtaining request message to the second charging function network element. Accordingly, the second charging function network element receives the data obtaining request message from the first charging function network element.

For example, when the first charging function network element determines to obtain the user data of the terminal device from the second charging function network element, the first charging function network element sends the data obtaining request message to the second charging function network element, where the data obtaining request message is for requesting to obtain the user data of the terminal device.

It may be understood that the data obtaining request message may be the charging request message received by the first charging function network element (that is, the first charging function network element forwards the received charging request message to the second charging function network element), or may be a message newly generated by the first charging function network element. This is not limited in this application.

The following describes, by using examples, specific implementations in which the first charging function network element sends the data obtaining request message to the second charging function network element.

Example 1: When serving as the serving charging function network element of the terminal device, the second charging function network element sends first information to at least one candidate charging function network element of the terminal device. For example, the second charging function network element sends the first information to the at least one candidate charging function network element of the terminal device in a broadcast manner. The first information indicates that the second charging function network element is a network element that currently provides the charging service for the terminal device. In other words, the first information indicates that the second charging function network element is the serving charging function network element of the terminal device. The first information includes the address information of the second charging function network element and an identifier of the terminal device. It may be understood that, when the second charging function network element serves as the serving charging function network element of the terminal device, the at least one candidate charging function network element of the terminal device includes the first charging function network element. It may be further understood that the second charging function network element may send the first information to the at least one candidate charging function network element at any moment after starting the charging processing on the terminal device and before terminating the charging processing on the terminal device.

Accordingly, the first charging function network element receives the first information from the second charging function network element, records, based on the first information, that the second charging function network element is the network element that currently provides the charging service for the terminal device, and stores a correspondence between the address information of the second charging function network element and the identifier of the terminal device. Before the first charging function network element sends the data obtaining request message to the second charging function network element, the first charging function network element obtains, from the local storage based on the identifier of the terminal device, the address information that is of the second charging function network element and that corresponds to the identifier of the terminal device. Then, the first charging function network element sends the data obtaining request message to the second charging function network element based on the address information of the second charging function network element.

Optionally, in this implementation, after determining to serve as the serving charging function network element of the terminal device (for example, after the first charging function network element obtains the user data from the second charging function network element), the first charging function network element may further send second information to at least one candidate charging function network element of the terminal device. For example, the second charging function network element broadcasts the second information to the at least one candidate charging function network element of the terminal device. The second information indicates that the first charging function network element is a network element that currently provides the charging service for the terminal device. In other words, the second information indicates that the first charging function network element is the serving charging function network element of the terminal device. The second information includes the identifier of the terminal device and the address information of the first charging function network element. It may be understood that, when the first charging function network element serves as the serving charging function network element of the terminal device, the at least one candidate charging function network element includes the second charging function network element. It may be further understood that the first charging function network element may send the second information to the at least one candidate charging function network element of the terminal device after obtaining the user data of the terminal device, or may send the second information to the at least one candidate charging function network element of the terminal device after performing charging processing on the terminal device. This is not limited in this application.

Example 2: When serving as the serving charging function network element of the terminal device, the second charging function network element sends fourth information to the network repository function network element. The fourth information indicates that the second charging function network element is a network element that currently provides the charging service for the terminal device. In other words, the fourth information indicates that the second charging function network element is the serving charging function network element of the terminal device. The fourth information includes the address information of the second charging function network element and an identifier of the terminal device. The network repository function network element stores a correspondence between the address information of the second charging function network element and the identifier of the terminal device. Before sending the data obtaining request message to the second charging function network element, the first charging function network element sends a query request message to the network repository function network element, where the query request message includes the identifier of the terminal device, and the query request message is for querying for the address information of the network element that currently provides the charging service for the terminal device. After receiving the query request message from the first charging function network element, the network repository function network element determines, based on the identifier of the terminal device, the address information that is of the second charging function network element and that corresponds to the identifier of the terminal device, and then returns the address information of the second charging function network element to the first charging function network element. Accordingly, the first charging function network element receives the address information of the second charging function network element from the network repository function network element. Then, the first charging function network element sends the data obtaining request message to the second charging function network element based on the address information of the second charging function network element.

Optionally, in this implementation, after determining to perform charging processing on the terminal device, the first charging function network element sends third information to the network repository function network element. The third information indicates that the first charging function network element is a network element that currently provides the charging service for the terminal device. In other words, the third information indicates that the first charging function network element is the serving charging function network element of the terminal device. The third information includes the identifier of the terminal device and the address information of the first charging function network element. It may be understood that the first charging function network element may send the third information to the network repository function network element after obtaining the user data of the terminal device, or may send the second information to the network repository function network element after performing charging processing on the terminal device. This is not limited in this application.

Example 3: If the charging trigger function network element obtains the address information of the second charging function network element before S401, and includes the address information of the second charging function network element in the charging request message, the first charging function network element may obtain the address information of the second charging function network element from the charging request message. Then, the first charging function network element sends the data obtaining request message to the second charging function network element based on the address information of the second charging function network element.

Optionally, S402c: The second charging function network element sends the user data to the first charging function network element. Accordingly, the first charging function network element receives the user data from the second charging function network element.

For example, after receiving the data obtaining request message from the first charging function network element, the second charging function network element locally queries for the user data of the terminal device, and then sends the user data to the first charging function network element.

The user data delivered by the second charging function network element may be data in a plurality of forms, for example, a format file, a compressed format file, and information that is in a CDATA format and that is directly carried in a message. This is not limited in this application.

It may be further understood that the second charging function network element may deliver the user data at a time, or may deliver the user data in a plurality of batches in a charging process. This is not limited in this application.

Optionally, after sending the user data of the terminal device to the first charging function network element, the second charging function network element deletes the user data from local storage.

Optionally, in a scenario in which a UE switches a session in session and service continuity mode 3, after sending the user data to the first charging function network element, the second charging function network element may further generate new user data. In this case, when determining to release a charging resource, the second charging function network element sends the new user data to the first charging function network element.

In the case 1, if a data amount of the user data is large, duration of migration of the user data may also be long, which may result in a problem, for example, a high service processing delay of the terminal device or timeout of processing of the charging request message. Based on this, the procedure in the case 1 may be optimized in the following two possible implementations.

### Manner 1:

For example, before receiving the user data from the second charging function network element, the first charging function network element sends a first charging response message to the charging trigger function network element, where the first charging response message indicates the charging trigger function network element to bypass a service of the terminal device. Specifically, for example, the first charging function network element sends the first charging response message to the charging trigger function network element after the first charging function network element determines to obtain the user data of the terminal device from the second charging function network element, after the first charging function network element sends the data obtaining request message to the second charging function network element and before the first charging function network element receives the user data from the second charging function network element, or after the first charging function network element sends the data obtaining request message to the second charging function network element and receives a temporary response message from the second charging function network element. In other words, before performing migration of the user data, the first charging function network element first replies to the charging trigger function network element with the first charging response message.

Accordingly, after receiving the first charging response message from the first charging function network element, the charging trigger function network element bypasses the service of the terminal device based on the first charging response message. For example, for an online mode, the charging trigger function network element suspends quota management; and for an offline mode, the charging trigger function network element directly returns a charging request processing success status code to the terminal device, or the charging trigger function network element returns a temporary response message to the terminal device, so that the terminal device can initiate the service request.

Optionally, in the manner 1, after performing charging processing on the terminal device based on the user data of the terminal device, the first charging function network element may send a second charging response message to the charging trigger function network element, where the second charging response message includes a processing result of performing charging processing on the terminal device by the first charging function network element.

Optionally, in the manner 1, after the first charging function network element receives the user data from the second charging function network element, the first charging function network element may further send indication information to the charging trigger function network element, where the indication information indicates to re-request to charge the terminal device. After receiving the indication information from the first charging function network element, the charging trigger function network element sends a charging request message to the first charging function network element again based on the indication information, where the charging request message is for requesting to charge the terminal device. Accordingly, the first charging function network element receives the charging request message from the charging trigger function network element again, and performs S402 based on the charging request message.

### Manner 2:

For example, the user data delivered by the second charging function network element to the first charging function network element may include only a part of data in data associated with the terminal device. For example, the user data is data that is in the data associated with the terminal device and that is for performing charging processing on the terminal device. In this case, the second charging function network element sends, to the first charging function network element only after the first charging function network element performs charging processing on the terminal device based on the user data of the terminal device, data other than the user data in the data associated with the terminal device. In other words, in the manner 2, the second charging function network element first enables the part of data in the user data of the terminal device to migrate to the first charging function network element, where the part of data is the data needed for performing charging processing on the terminal device. After the first charging function network element performs charging processing on the terminal device, the second charging function network element enables the remaining data to migrate to the first charging function network element, to reduce a processing delay that is of the charging request message and that is caused by the migration of the user data.

### Case 2:

Optionally, S402d: The second charging function network element sends the user data to the first charging function network element. Accordingly, the first charging function network element receives the user data from the second charging function network element.

For example, after serving as the serving charging function network element of the terminal device and performing charging processing on the terminal device, the second charging function network element sends, to at least one candidate charging function network element of the terminal device, the user data obtained through the charging processing. For example, the second charging function network element broadcasts the user data to the at least one candidate charging function network element of the terminal device. In other words, in this implementation, the candidate charging function network element of the terminal device synchronously maintains the user data of the terminal device. It may be understood that, when the second charging function network element serves as the serving charging function network element of the terminal device, the at least one candidate charging function network element includes the first charging function network element.

Optionally, in a scenario in which a UE switches a session in session and service continuity mode 3, after sending the user data to the first charging function network element, the second charging function network element may further generate new user data. In this case, when determining to release a charging resource, the second charging function network element sends the new user data to the at least one candidate charging function network element.

Optionally, S402e: The first charging function network element stores the user data.

For example, after receiving the user data, the first charging function network element stores the user data. Specifically, for example, the first charging function network element stores a correspondence between the user data and an identifier of the terminal device.

Based on the foregoing solution, the first charging function network element obtains, in advance, and stores the user data of the terminal device. In this case, after receiving the charging request message from the charging trigger function network element, the first charging function network element obtains the user data of the terminal device from local storage based on the identifier of the terminal device, and then performs charging processing on the terminal device based on the user data.

Optionally, in the case 2, after performing charging processing on the terminal device, the first charging function network element may send a charging result to at least one candidate charging function network element of the terminal device, where the charging result is data obtained by performing charging processing on the terminal device by the first charging function network element.

In the foregoing solution, when a location change of the terminal device causes a change of the serving charging function network element of the terminal device, the charging function network element (namely, the charging function network element that receives the charging request message from the charging trigger function network element) nearest to the terminal device obtains the user data of the terminal device via a current serving charging function network element of the terminal device, and provides the charging service for the terminal device. According to the foregoing solution, cross-area transmission of a large amount of charging information generated in the charging process can be reduced, to save a network resource, reduce signaling network load and operation costs, and improve cyber resilience. For example, when a network is divided into a plurality of areas (for example, the network is deployed based on provinces in China, one network crosses a plurality of countries in Europe, and an operator network covers a plurality of islands in a coastal country), a plurality of core networks and charging systems need to be deployed in the plurality of areas. If a home charging system is used to charge the terminal device, when the terminal device moves to an area outside a home area, a large amount of charging information (for example, information such as a call detail record) generated by the terminal device in real time needs to be routed to the home charging system of the terminal device. Consequently, the signaling network load and the operation costs are increased. However, in the foregoing solution, the charging function network element (namely, the charging function network element that receives the charging request message) nearest to the terminal device is used to charge the terminal device, so that the network resource can be saved, and impact that is on user service use and that is caused when a charging network line is faulty can be reduced.

With reference to FIG. 5 to FIG. 16, the following describes charging methods 500 to 1600 provided in embodiments of this application. It may be understood that the method 500 to the method 1600 are several possible implementations in which the method 400 is applied to a 5G communication system. In the method 500 to the method 1600, an example in which a terminal device is a UE, a first charging function network element is a CHF 2, and a second charging function network element is a CHF 1 is used for description. In addition, in the methods 500 to 1000, an example in which a charging trigger function network element is an SMF is used for description. In the methods 1100 to 1300, an example in which a charging trigger function network element is an AMF is used for description. In the methods 1400 to 1600, an example in which a charging trigger function network element is a MEC 2 CTF is used for description.

FIG. 5 is an example flowchart of a method 500 according to an embodiment of this application. In the method 500, when serving as a serving CHF of a UE, a CHF 1 broadcasts, to a candidate CHF of the UE, information indicating that the CHF 1 is a network element that currently provides a charging service for the UE. When the serving CHF of the UE is switched from the CHF 1 to a CHF 2, the CHF 2 obtains user data of the UE via the CHF 1, and performs charging processing on the UE based on the obtained user data.

It should be noted that the method 500 is described by using an example in which the UE switches a PDU session in session and service continuity (session and service continuity, SSC) mode 2 (mode 2) in an online charging scenario. In SSC mode 2, when a session anchor is changed, a connection between the UE and an old PDU session anchor is first released, and then a connection between the UE and a new PDU session anchor is established. In this process, a service is interrupted.

The following describes the method 500 by using an example with reference to steps in FIG. 5.

S501: The UE establishes a PDU session #1 with a UPF 1, and performs data transmission through the PDU session #1. A specific process is not limited in this application.

S502: An SMF 1 sends an initial request message #1 to the CHF 1. Accordingly, the CHF 1 receives the initial request message #1 from the SMF 1.

For example, in an establishment procedure for the PDU session #1, for example, after receiving, from an AMF, a session management context creation request (Nsm_PDUSession_CreateSMContext Request) message for the PDU session #1, the SMF 1 sends the initial request (initial request) message #1 for the PDU session #1 to the CHF 1. The SMF 1 is an SMF that serves the PDU session #1, and the initial request message #1 is for requesting to charge the UE for the PDU session #1. A specific process is not limited in this application.

S503: The CHF 1 performs charging processing on the UE based on user data #1.

For example, after receiving the initial request message #1 from the SMF 1, the CHF 1 obtains the user data #1 of the UE, and then performs charging processing on the UE based on the user data #1. A specific process is not limited in this application.

S504: The CHF 1 sends information #1 to the CHF 2 and a CHF 3. Accordingly, the CHF 2 and the CHF 3 receive the information #1 from the CHF 1.

For example, in this embodiment, assuming that the CHF 2 and the CHF 3 are current candidate CHFs of the UE, the CHF 1 sends the information #1 to the CHF 2 and the CHF 3 after the CHF 1 performs charging processing on the UE, in other words, after the CHF 1 becomes the serving CHF of the UE. The information #1 indicates that the CHF 1 is the network element that currently provides the charging service for the UE, or the information #1 indicates that the CHF 1 is a current serving CHF of the UE. The information #1 includes address information of the CHF 1 and an identifier of the UE. A specific implementation in which the CHF 1 sends the information #1 to the CHF 3 and the CHF 3 is not limited in this application. In an example, the CHF 1 sends the information #1 to the CHF 2 and the CHF 3 in a broadcast manner.

Accordingly, after receiving the information #1 from the CHF 1, the CHF 2 and the CHF 3 store the address information of the CHF 1 and the identifier of the UE.

It may be understood that the CHF 1 may perform S504 at any moment after providing the charging service for the UE and before stopping providing the charging service for the UE. This is not limited in this application.

S505: The SMF 1 determines to perform UPF handover.

For example, the SMF 1 determines that a UPF that serves the UE needs to be handed over. For example, when the UPF 1 cannot serve the UE anymore because the UE moves or a signal between the UPF 1 and the UE is poor, the SMF 1 determines that the UPF that serves the UE needs to be handed over.

Optionally, S506: The SMF 1 sends a session management context status notification request message to the AMF. Accordingly, the AMF receives the session management context status notification request message from the SMF 1.

For example, when determining to hand over the UPF, the SMF 1 sends the session management context status notification request (Nsmf_PDUSession_SMContextStatusNotify Request) message to the AMF, where the session management context status notification request message indicates the AMF to release the PDU session #1.

Optionally, S507: The AMF sends a session management context status notification response message to the SMF 1. Accordingly, the SMF 1 receives the session management context status notification response message from the AMF.

For example, after receiving the session management context status notification request message from the SMF 1, the AMF returns the session management context status notification response (Nsmf_PDUSession_SMContextStatusNotify Response) message to the SMF 1.

S508: Perform a release procedure for the PDU session #1.

For example, the AMF triggers the release procedure for the PDU session #1, that is, triggers the UE to disconnect from the UPF 1, based on the session management context status notification request message. For a specific process, refer to an existing protocol. Details are not described herein.

S509: The SMF 1 sends a termination request message to the CHF 1. Accordingly, the CHF 1 receives the termination request message from the SMF 1.

For example, after the PDU session #1 is released, the SMF 1 sends the termination request (termination request) message to the CHF 1, where the termination request message is for requesting to terminate a charging session corresponding to the PDU session #1, that is, release a charging resource that is between the SMF 1 and the CHF 1 and that is for the PDU session #1.

S510: The CHF 1 sends a termination response message to the SMF 1. Accordingly, the SMF 1 receives the termination response message from the CHF 1.

For example, after receiving the termination request message #1 from the SMF 1, the CHF 1 releases the charging resource, and returns the termination response (termination response) message.

The termination response message #1 includes final usage of the PDU session, namely, usage of user traffic between a previous initial request (namely, a charging request) and the termination request message. In the online charging scenario, the usage of the user traffic is usage for a quota. In an offline charging scenario, the usage of the user traffic is usage of traffic obtained through statistics collection.

S511: Perform an establishment procedure for a PDU session #2 between the UE and a UPF 2.

For example, after the release procedure for the PDU session #1 is terminated, the UE triggers the establishment procedure for the PDU session #2 between the UE and the UPF 2. For a specific process, refer to the existing protocol. Details are not described herein.

S512: An SMF 2 sends an initial request message #2 to the CHF 2. Accordingly, the CHF 2 receives the initial request message #2 from the SMF 2.

For example, in the establishment procedure for the PDU session #2, for example, after receiving, from the AMF, a session management context creation request (Nsm_PDUSession_CreateSMContext Request) message for the PDU session #2, the SMF 2 sends the initial request (initial request) message #2 for the PDU session #2 to the CHF 2. The SMF 2 is an SMF that serves the PDU session #2, and the initial request message #2 is for requesting to charge the UE for the PDU session #2.

For specific implementations in which the SMF 2 sends the initial request message #1 to the CHF 1, refer to the implementations in which the charging trigger function network element sends the charging request message to the first charging function network element in S401 in the method 400. For example, the SMF 2 in S512 corresponds to the charging trigger function network element in S401, the CHF 2 in S512 corresponds to the first charging function network element in S401, and the initial request message #2 in S512 corresponds to the charging request message in S401. Details are not described herein again.

S513: The CHF 2 sends a data obtaining request message to the CHF 1. Accordingly, the CHF 1 receives the data obtaining request message from the CHF 2.

For example, after receiving the initial request message #2 from the SMF 2, the CHF 2 determines, in local storage based on the identifier of the UE, the address information that is of the CHF 1 and that corresponds to the identifier of the UE. It may be understood that the CHF 2 stores a correspondence between the identifier of the UE and the address information of the CHF 1 after S504.

Further, the CHF 2 sends the data obtaining request message to the CHF 1 based on the address information of the CHF 1, where the data obtaining request message is for requesting to obtain user data of the UE. The data obtaining request message includes the identifier of the UE.

S514: The CHF 1 sends user data #2 to the CHF 2. Accordingly, the CHF 2 receives the user data #2 from the CHF 1.

For example, after receiving the data obtaining request message from the CHF 2, the CHF 1 locally obtains the user data #2 of the UE based on the identifier of the UE. It may be understood that the user data #2 is user data obtained by the CHF 1 through updating based on a charging result after the CHF 1 performs charging processing on the UE.

It may be understood that S513 and S514 are a specific example of the example 1 in S402b in the method 400 in a 5G system. For a detailed process, refer to the descriptions in the example 1. Details are not described herein again.

S515: The CHF 2 performs charging processing on the UE based on the user data #2.

For example, after receiving the user data #2 from the CHF 1, the CHF 2 charges the UE based on the user data #2. For a specific process, refer to S402 in the method 400. Details are not described herein again.

S516: The CHF 2 sends an initial response message to the SMF 2. Accordingly, the SMF 2 receives the initial response message from the CHF 2.

For example, after receiving the user data #2 from the CHF 1, or after performing charging processing on the UE based on the user data #2, the CHF 2 returns the initial response message to the SMF 2. The initial response message is for responding to the initial request message #2.

S517: The CHF 2 sends information #2 to the CHF 1 and the CHF 3. Accordingly, the CHF 1 and the CHF 3 receive the information #2 from the CHF 2.

For example, when the CHF 2 serves as the serving CHF of the UE, the CHF 1 and the CHF 3 are current candidate CHFs of the UE. In this case, the CHF 2 sends the information #2 to the CHF 1 and the CHF 3 after the CHF 2 performs charging processing on the UE, in other words, after the CHF 2 becomes the serving CHF of the UE. The information #2 indicates that the CHF 2 is a network element that currently provides the charging service for the UE, or the information #2 indicates that the CHF 2 is a current serving CHF of the UE. The information #2 includes address information of the CHF 2 and the identifier of the UE. A specific implementation in which the CHF 2 sends the information #2 to the CHF 1 and the CHF 3 is not limited in this application. In an example, the CHF 2 sends the information #1 to the CHF 1 and the CHF 3 in a broadcast manner.

Accordingly, after receiving the information #2 from the CHF 1, the CHF 1 and the CHF 3 store the address information of the CHF 2 and the identifier of the UE.

It may be understood that the CHF 2 may perform S517 at any moment after providing the charging service for the UE and before stopping providing the charging service for the UE. This is not limited in this application.

According to the foregoing solution, when the serving CHF of the UE is changed due to a location change of the UE, a CHF nearest to the UE obtains the user data of the UE via a CHF that provides the charging service for the UE last time, and provides the charging service for the UE. In this way, cross-area transmission of a large amount of charging information generated in a charging process can be reduced, to save a network resource and reduce operation costs.

FIG. 6A and FIG. 6B are an example flowchart of a method 600 according to an embodiment of this application. In the method 600, when serving as a serving CHF of a UE, a CHF 1 indicates, to an NRF, that the CHF 1 is a network element that currently provides a charging service for the UE. When the serving CHF of the UE is switched from the CHF 1 to a CHF 2, the CHF 2 obtains address information of the CHF 1 via the NRF, then obtains user data of the UE from the CHF 1 based on the address information of the CHF 1, and performs charging processing on the UE based on the user data of the UE.

It may be understood that the method 600 is described by using an example in which the UE switches a PDU session in SSC mode 2 in an online charging scenario.

The following describes the method 600 by using an example with reference to steps in FIG. 6A and FIG. 6B.

S601: The UE establishes a PDU session #1 with a UPF 1, and performs data transmission through the PDU session #1. A specific process is not limited in this application.

It may be understood that, in an establishment procedure for the PDU session #1, an SMF 1 triggers the CHF 1 to charge the UE. A specific process is not limited in this application.

S602: The SMF 1 sends an initial request message #1 to the CHF 1. Accordingly, the CHF 1 receives the initial request message #1 from the SMF 1.

S603: The CHF 1 performs charging processing on the UE based on user data #1.

S601 to S603 are similar to S501 to S503 in the method 500. For brevity, details are not described herein again.

S604: The CHF 1 sends information #1 to the NRF. Accordingly, the NRF receives the information #1 from the CHF 1.

For example, the CHF 1 sends the information #1 to the NRF after the CHF 1 performs charging processing on the UE, in other words, after the CHF 1 becomes the serving CHF of the UE. The information #1 indicates that the CHF 1 is the network element that currently provides the charging service for the UE, or the information #1 indicates that the CHF 1 is a current serving CHF of the UE. The information #1 includes the address information of the CHF 1 and an identifier of the UE. Accordingly, the NRF stores a correspondence between the address information of the CHF 1 and the identifier of the UE. In other words, the NRF records that the CHF 1 is the network element that currently provides the charging service for the UE. In other words, the NRF records that the serving CHF of the UE is the CHF 1.

It may be understood that the CHF 1 may perform S604 at any moment after providing the charging service for the UE and before stopping providing the charging service for the UE. This is not limited in this application.

S605: The SMF 1 determines to perform UPF handover.

Optionally, S606: The SMF 1 sends a session management context status notification request message to an AMF.

Optionally, S607: The AMF sends a session management context status notification response message to the SMF 1.

S608: Perform a release procedure for the PDU session #1.

S609: The SMF 1 sends a termination request message to the CHF 1. Accordingly, the CHF 1 receives the termination request message from the SMF 1.

S610: The CHF 1 sends a termination response message #1 to the SMF 1. Accordingly, the SMF 1 receives the termination response message #1 from the CHF 1.

S611: Perform an establishment procedure for the PDU session #1 between the UE and the UPF 1.

S612: An SMF 2 sends an initial request message #2 to the CHF 2. Accordingly, the CHF 2 receives the initial request message #2 from the SMF 2.

S605 to S612 are similar to S505 to S512 in the method 500. For brevity, a detailed process is not described herein again.

S613: The CHF 2 sends a query request message to the NRF. Accordingly, the NRF receives the query request message from the CHF 2.

For example, after receiving the initial request message #1 from the SMF 2, the CHF 2 sends the query request message to the NRF, where the query request message includes the identifier of the UE, and the query request message is for querying for the address information of the network element that currently provides the charging service for the UE.

S614: The NRF sends a query response message to the CHF 2. Accordingly, the CHF 2 receives the query response message from the NRF.

For example, after receiving the query request message from the CHF 2, the NRF determines, in local storage based on the identifier of the UE, the address information that is of the CHF 1 and that corresponds to the identifier of the UE. It may be understood that the NRF stores the correspondence between the identifier of the UE and the address information of the CHF 1 in S604.

Further, the NRF sends the query response message to the CHF 2, where the query response message includes the address information of the CHF 1.

S615: The CHF 2 sends a data obtaining request message to the CHF 1. Accordingly, the CHF 1 receives the data obtaining request message from the CHF 2.

S616: The CHF 1 sends user data #2 to the CHF 2. Accordingly, the CHF 2 receives the user data #2 from the CHF 1.

S615 and S616 are similar to S513 and S514 in the method 500. For brevity, details are not described herein again.

It may be understood that S613 to S616 are a specific example of the example 2 in S402b in the method 400 in a 5G system. For a detailed process, refer to the descriptions in the example 2. Details are not described herein again.

S618: The CHF 2 sends an initial response message to the SMF 2. Accordingly, the SMF 2 receives the initial response message from the CHF 2.

For example, after receiving the user data #2 from the CHF 1, or after performing charging processing on the UE based on the user data #2, the CHF 2 returns the initial response message to the SMF 2. The initial response message is for responding to the initial request message #2.

S619: The CHF 2 sends information #2 to the NRF. Accordingly, the NRF receives the information #1 from the CHF 2.

For example, the CHF 2 sends the information #2 to the NRF after the CHF 2 performs charging processing on the UE, in other words, after the CHF 2 becomes the serving CHF of the UE. The information #2 indicates that the CHF 2 is a network element that currently provides the charging service for the UE, or the information #2 indicates that the CHF 2 is a current serving CHF of the UE. The information #2 includes address information of the CHF 2 and the identifier of the UE.

Accordingly, after receiving the information #2 from the CHF 1, the NRF stores the address information of the CHF 2 and the identifier of the UE. In other words, the NRF updates the serving CHF of the UE to the CHF 2.

It may be understood that the CHF 2 may perform S619 at any moment after providing the charging service for the UE and before stopping providing the charging service for the UE. This is not limited in this application.

According to the foregoing solution, when the serving CHF of the UE is changed due to a location change of the UE, the CHF 2 nearest to the UE queries, via the NRF, for the CHF 1 that provides the charging service for the UE last time, obtains the user data of the UE via the CHF 1, and provides the charging service for the UE. In this way, cross-area transmission of a large amount of charging information generated in a charging process can be reduced, to save a network resource and reduce operation costs.

FIG. 7 is an example flowchart of a method 700 according to an embodiment of this application. In the method 700, when serving as a serving CHF of a UE, a CHF 1 broadcasts user data of the UE to a candidate CHF of the UE after performing charging processing on the UE. When the serving CHF of the UE is switched from the CHF 1 to a CHF 2, the CHF 2 performs charging processing on the UE based on user data obtained in advance.

It may be understood that the method 700 is described by using an example in which the UE switches a PDU session in SSC mode 2 in an online charging scenario.

The following describes the method 700 by using an example with reference to steps in FIG. 7.

S701: The UE establishes a PDU session #1 with a UPF 1, and performs data transmission through the PDU session #1. A specific process is not limited in this application.

S702: An SMF 1 sends an initial request message #1 to the CHF 1. Accordingly, the CHF 1 receives the initial request message #1 from the SMF 1.

S703: The CHF 1 performs charging processing on the UE based on user data #1.

S701 to S703 are similar to S501 to S503 in the method 500. For brevity, details are not described herein again.

S704: The CHF 1 sends user data #2 to the CHF 2 and a CHF 3. Accordingly, the CHF 2 and the CHF 3 receive the user data #2 from the CHF 1.

For example, in this embodiment, assuming that the CHF 2 and the CHF 3 are current candidate CHFs of the UE, the CHF 1 sends the user data #2 to the CHF 2 and the CHF 3 after the CHF 1 performs charging processing on the UE, in other words, after the CHF 1 becomes the serving CHF of the UE. It may be understood that the user data #2 is new user data generated by performing charging processing on the UE by the CHF 1. In other words, the CHF 1 synchronizes a charging result to the CHF 2 and the CHF 3.

Accordingly, the CHF 2 and the CHF 3 receive and store the user data #2. Specifically, for example, the CHF 2 and the CHF 3 store a correspondence between the user data #2 and an identifier of the UE.

S705: The SMF 1 determines to perform UPF handover.

Optionally, S706: The SMF 1 sends a session management context status notification request message to an AMF.

Optionally, S707: The AMF sends a session management context status notification response message to the SMF 1.

S708: Perform a release procedure for the PDU session #1.

S709: The SMF 1 sends a termination request message to the CHF 1. Accordingly, the CHF 1 receives the termination request message from the SMF 1.

S710: The CHF 1 sends a termination response message #1 to the SMF 1. Accordingly, the SMF 1 receives the termination response message #1 from the CHF 1.

S711: Perform an establishment procedure for the PDU session #1 between the UE and the UPF 1.

S712: An SMF 2 sends an initial request message #2 to the CHF 2. Accordingly, the CHF 2 receives the initial request message #2 from the SMF 2.

S705 to S712 are similar to S505 to S512 in the method 500. For brevity, a detailed process is not described herein again.

S713: The CHF 2 performs charging processing on the UE based on the user data #2.

For example, after receiving the initial request message #2 from the SMF 2, the CHF 2 obtains, from local storage based on the identifier of the UE carried in the initial request message #2, the user data #2 corresponding to the identifier of the UE. It may be understood that the user data #2 is obtained by the CHF 2 in S704.

Further, the CHF 2 charges the UE based on the user data #2. For a specific process, refer to S402 in the method 400. Details are not described herein again.

S714: The CHF 2 sends an initial response message to the SMF 2. Accordingly, the SMF 2 receives the initial response message from the CHF 2.

For example, after performing charging processing on the UE based on the user data #2, the CHF 2 returns the initial response message to the SMF 2. The initial response message is for responding to the initial request message #2.

S715: The CHF 2 sends user data #3 to the CHF 1 and the CHF 3. Accordingly, the CHF 1 and the CHF 3 receive the user data #3 from the CHF 2.

For example, when the CHF 2 serves as the serving CHF of the UE, the CHF 1 and the CHF 3 are current candidate CHFs of the UE. In this case, the CHF 2 sends the user data #3 to the CHF 1 and the CHF 3 after the CHF 2 performs charging processing on the UE, in other words, after the CHF 2 becomes the serving CHF of the UE. It may be understood that the user data #3 is user data obtained by performing charging processing on the UE by the CHF 2. In other words, the CHF 2 synchronizes a charging result to the CHF 1 and the CHF 3.

Accordingly, after receiving the user data #3 from the CHF 1, the CHF 1 and the CHF 3 store the user data #3.

It may be understood that the CHF 2 may perform S715 at any moment after providing the charging service for the UE and before stopping providing the charging service for the UE. This is not limited in this application.

According to the foregoing solution, candidate CHFs of the UE synchronously maintain user data of the UE. Regardless of which candidate CHF becomes the serving CHF of the UE, the candidate CHF may directly perform charging processing on the UE based on the user data of the UE. According to the foregoing solution, cross-area transmission of a large amount of charging information generated in a charging process can be reduced, to save a network resource and reduce operation costs.

FIG. 8A and FIG. 8B are an example flowchart of a method 800 according to an embodiment of this application. The method 800 corresponds to the method 500. A difference lies in that the method 800 is described by using an example in which a UE switches a PDU session in SSC mode 3 in an online charging scenario. The SSC mode 3 is a service and session continuity mode different from an SSC mode 2. In SSC mode 3, before a user plane is changed (that is, a session anchor is changed), a connection to a new PDU session anchor is first established, to ensure service continuity.

The following describes the method 800 by using an example with reference to steps in FIG. 8A and FIG. 8B.

S801: The UE establishes a PDU session #1 with a UPF 1, and performs data transmission through the PDU session #1. A specific process is not limited in this application.

S802: An SMF 1 sends an initial request message #1 to a CHF 1. Accordingly, the CHF 1 receives the initial request message #1 from the SMF 1.

S803: The CHF 1 performs charging processing on the UE based on user data #1.

S804: The CHF 1 sends information #1 to a CHF 2 and a CHF 3. Accordingly, the CHF 2 and the CHF 3 receive the information #1 from the CHF 1.

S805: The SMF 1 determines to perform UPF/SMF handover.

Optionally, S806: The SMF 1 sends a session management context status notification request message to an AMF. Accordingly, the AMF receives the session management context status notification request message from the SMF 1.

Optionally, S807: The AMF sends a session management context status notification response message to the SMF 1. Accordingly, the SMF 1 receives the session management context status notification response message from the AMF.

For example, S801 to S807 are similar to S501 to S507 in the method 500. For brevity, details are not described herein again.

S808: The SMF 1 sends an N1N2 message transfer request message to the AMF. Accordingly, the AMF receives the N1N2 message transfer request message from the SMF 1.

For example, the N1N2 message transfer (Namf_Communication_N1N2MessageTransfer) request message includes a PDU session ID, SMF relocation indication information, an N1 SM container, and the like. The PDU session ID is an identifier of the PDU session #1, and the SMF relocation indication information indicates whether to request to reallocate an SMF.

S809: The AMF sends an N1N2 message transfer response message to the SMF 1. Accordingly, the SMF 1 receives the N1N2 message transfer response message from the AMF. The N1N2 message transfer response message is for responding to the N1N2 message transfer request message.

S810: The AMF sends a PDU session modification command to the UE. Accordingly, the UE receives the PDU session modification command from the AMF.

For example, the PDU session modification command includes the information carried in the N1N2 message transfer request message.

S811: The UE sends a PDU session modification command acknowledgment message to the AMF. Accordingly, the AMF receives the PDU session modification command acknowledgment message from the UE. The PDU session modification command message acknowledgment message is for responding to the PDU session modification command.

S812: The AMF sends a session management context update request (Nsmf PDUSession UpdateSMContext Request) message to the SMF 1. Accordingly, the SMF 1 receives the session management context update request message from the AMF.

For example, the AMF sends, to the AMF via the session management context update request message, an N1 SM container received from a RAN.

S813: The SMF 1 sends a session management context update response (Nsmf PDUSession UpdateSMContext Response) message to the AMF. Accordingly, the AMF receives the session management context update response message from the SMF 1. The session management context update response message is for responding to the session management context update request message.

S814: Perform an establishment procedure for a PDU session #2 between the UE and a UPF 2.

For example, after receiving the PDU session modification command, the UE determines whether to trigger establishment of the PDU session #2 between the UE and the UPF 2. A specific process is not limited in this application.

It may be understood that, when S814 is performed, the PDU session #1 has not been released.

S815: An SMF 2 sends an initial request message #2 to the CHF 2. Accordingly, the CHF 2 receives the initial request message #2 from the SMF 2.

S816: The CHF 2 sends a data obtaining request message to the CHF 1. Accordingly, the CHF 1 receives the data obtaining request message from the CHF 2.

S817: The CHF 1 sends user data #2 to the CHF 2. Accordingly, the CHF 2 receives the user data #2 from the CHF 1.

S818: The CHF 2 performs charging processing on the UE based on the user data #2.

S819: The CHF 2 sends an initial response message to the SMF 2. Accordingly, the SMF 2 receives the initial response message from the CHF 2.

S820: The CHF 2 sends information #2 to the CHF 1 and the CHF 3. Accordingly, the CHF 1 and the CHF 3 receive the information #2 from the CHF 2.

S815 to S820 are similar to S512 to S517 in the method 500. For brevity, a detailed process is not described herein again.

S821: Perform a release procedure for the PDU session #1.

For example, after the establishment of the PDU session #2 is completed, the SMF 1 triggers the release procedure for the PDU session #1. A specific process is not limited in this application.

S822: The SMF 1 sends a termination request message #1 to the CHF 1. Accordingly, the CHF 1 receives the termination request message #1 from the SMF 1.

For example, after the PDU session #1 is released, the SMF 1 sends the termination request (termination request) message #1 to the CHF 1 (CHF 1). The CHF 1 is a network element that previously provides a charging service for the UE.

The termination request message #1 is for requesting to terminate a charging session corresponding to the PDU session #1, that is, release a charging resource that is between the SMF 1 and the CHF 1 and that is for the PDU session #1.

S823: The CHF 1 sends a termination response message #1 to the SMF 1. Accordingly, the SMF 1 receives the termination response message #1 from the CHF 1.

For example, after receiving the termination request message from the SMF 1, the CHF 1 releases the charging resource, and returns the termination response (termination response) message. The termination response message includes final usage of the PDU session #1.

Optionally, S824: The CHF 1 sends user data #3 to the CHF 2. Accordingly, the CHF 2 receives the user data #3 from the CHF 1.

For example, the CHF 1 enables the user data #3 to migrate to the CHF 2. The user data #3 is remaining user data of the UE other than the user data #2. The user data #3 may be, for example, new user data generated by the CHF 1 between S817 and S822.

The SMF 2 and the CHF 2 continue to perform a subsequent charging procedure. A specific process is not limited in this application.

According to the foregoing solution, when a serving CHF of the UE is changed due to a location change of the UE, a CHF nearest to the UE obtains user data of the UE via a CHF that provides the charging service for the UE last time, and provides the charging service for the UE. In this way, cross-area transmission of a large amount of charging information generated in a charging process can be reduced, to save a network resource and reduce operation costs.

FIG. 9A and FIG. 9B are an example flowchart of a method 900 according to an embodiment of this application. The method 900 corresponds to the method 600. A difference lies in that the method 900 is described by using an example in which a UE switches a PDU session in SSC mode 3 in an online charging scenario.

The following describes the method 900 by using an example with reference to steps in FIG. 9A and FIG. 9B.

S901: The UE establishes a PDU session #1 with a UPF 1, and performs data transmission through the PDU session #1. A specific process is not limited in this application.

S902: An SMF 1 sends an initial request message #1 to a CHF 1. Accordingly, the CHF 1 receives the initial request message #1 from the SMF 1.

S903: The CHF 1 performs charging processing on the UE based on user data #1.

S904: The CHF 1 sends information #1 to an NRF. Accordingly, the NRF receives the information #1 from the CHF 1.

S905: The SMF 1 determines to perform UPF handover.

Optionally, S906: The SMF 1 sends a session management context status notification request message to an AMF.

Optionally, S907: The AMF sends a session management context status notification response message to the SMF 1.

S901 to S907 are similar to S601 to S607 in the method 600. For brevity, a detailed process is not described herein again.

S908: The SMF 1 sends an N1N2 message transfer request message to the AMF. Accordingly, the AMF receives the N1N2 message transfer request message from the SMF 1.

S909: The AMF sends an N1N2 message transfer response message to the SMF 1. Accordingly, the SMF 1 receives the N1N2 message transfer response message from the AMF.

S910: The AMF sends a PDU session modification command to the UE. Accordingly, the UE receives the PDU session modification command from the AMF.

S911: The UE sends a PDU session modification command acknowledgment message to the AMF. Accordingly, the AMF receives the PDU session modification command acknowledgment message from the UE.

S912: The AMF sends a session management context update request (Nsmf PDUSession UpdateSMContext Request) message to the SMF 1. Accordingly, the SMF 1 receives the session management context update request message from the AMF.

S913: The SMF 1 sends a session management context update response (Nsmf PDUSession UpdateSMContext Response) message to the AMF. Accordingly, the AMF receives the session management context update response message from the SMF 1.

S914: Perform an establishment procedure for a PDU session #2 between the UE and a UPF 2.

S908 to S914 are similar to S808 to S814 in the method 800. For brevity, a detailed process is not described herein again.

S915: An SMF 2 sends an initial request message #2 to a CHF 2. Accordingly, the CHF 2 receives the initial request message #2 from the SMF 2.

S916: The CHF 2 sends a query request message to the NRF. Accordingly, the NRF receives the query request message from the CHF 2.

S917: The NRF sends a query response message to the CHF 2. Accordingly, the CHF 2 receives the query response message from the NRF.

S918: The CHF 2 sends a data obtaining request message to the CHF 1. Accordingly, the CHF 1 receives the data obtaining request message from the CHF 2.

S919: The CHF 1 sends user data #2 to the CHF 2. Accordingly, the CHF 2 receives the user data #2 from the CHF 1.

S920: The CHF 2 sends an initial response message to the SMF 2. Accordingly, the SMF 2 receives the initial response message from the CHF 2.

S921: The CHF 2 sends information #2 to the NRF. Accordingly, the NRF receives the information #1 from the CHF 2.

S915 to S921 are similar to S612 to S619 in the method 600. For brevity, a detailed process is not described herein again.

S922: Perform a release procedure for the PDU session #1.

S923: The SMF 1 sends a termination request message #1 to the CHF 1. Accordingly, the CHF 1 receives the termination request message #1 from the SMF 1.

S924: The CHF 1 sends a termination response message #1 to the SMF 1. Accordingly, the SMF 1 receives the termination response message #1 from the CHF 1.

S922 to S924 are similar to S821 to S823 in the method 800. For brevity, a detailed process is not described herein again.

According to the foregoing solution, when a serving CHF of the UE is changed due to a location change of the UE, the CHF 2 nearest to the UE queries, via the NRF, for the CHF 1 that provides a charging service for the UE last time, obtains the user data of the UE via the CHF 1, and provides the charging service for the UE. In this way, cross-area transmission of a large amount of charging information generated in a charging process can be reduced, to save a network resource and reduce operation costs.

FIG. 10A and FIG. 10B are an example flowchart of a method 1000 according to an embodiment of this application. The method 1000 corresponds to the method 700. A difference lies in that the method 1000 is described by using an example in which a UE switches a PDU session in SSC mode 3 in an online charging scenario.

The following describes the method 1000 by using an example with reference to steps in FIG. 10A and FIG. 10B.

S1001: The UE establishes a PDU session #1 with a UPF 1, and performs data transmission through the PDU session #1. A specific process is not limited in this application.

S1002: An SMF 1 sends an initial request message #1 to a CHF 1. Accordingly, the CHF 1 receives the initial request message #1 from the SMF 1.

S1003: The CHF 1 performs charging processing on the UE based on user data #1.

S1004: The CHF 1 sends user data #2 to a CHF 2 and a CHF 3. Accordingly, the CHF 2 and the CHF 3 receive the user data #2 from the CHF 1.

S1005: The SMF 1 determines to perform UPF handover.

Optionally, S1006: The SMF 1 sends a session management context status notification request message to an AMF.

Optionally, S1007: The AMF sends a session management context status notification response message to the SMF 1.

S1001 to S1007 are similar to S701 to S707 in the method 700. For brevity, a detailed process is not described herein again.

S1008: The SMF 1 sends an N1N2 message transfer request message to the AMF. Accordingly, the AMF receives the N1N2 message transfer request message from the SMF 1.

S1009: The AMF sends an N1N2 message transfer response message to the SMF 1. Accordingly, the SMF 1 receives the N1N2 message transfer response message from the AMF.

S1010: The AMF sends a PDU session modification command to the UE. Accordingly, the UE receives the PDU session modification command from the AMF.

S1011: The UE sends a PDU session modification command acknowledgment message to the AMF. Accordingly, the AMF receives the PDU session modification command acknowledgment message from the UE.

S1012: The AMF sends a session management context update request (Nsmf PDUSession UpdateSMContext Request) message to the SMF 1. Accordingly, the SMF 1 receives the session management context update request message from the AMF.

S1013: The SMF 1 sends a session management context update response (Nsmf PDUSession UpdateSMContext Response) message to the AMF. Accordingly, the AMF receives the session management context update response message from the SMF 1.

S1014: Perform an establishment procedure for a PDU session #2 between the UE and a UPF 2.

S1008 to S1014 are similar to S808 to S814 in the method 800. For brevity, a specific process is not described in detail again.

S1015: An SMF 2 sends an initial request message #2 to the CHF 2. Accordingly, the CHF 2 receives the initial request message #2 from the SMF 2.

S1016: The CHF 2 performs charging processing on the UE based on the user data #2.

S1017: The CHF 2 sends an initial response message to the SMF 2. Accordingly, the SMF 2 receives the initial response message from the CHF 2.

S1018: The CHF 2 sends user data #3 to the CHF 1 and the CHF 3. Accordingly, the CHF 1 and the CHF 3 receive the user data #3 from the CHF 2.

S1015 to S1018 are similar to S712 to S715 in the method 700. For brevity, a detailed process is not described herein again.

S1019: Perform a release procedure for the PDU session #1.

S1020: The SMF 1 sends a termination request message #1 to the CHF 1. Accordingly, the CHF 1 receives the termination request message #1 from the SMF 1.

S1021: The CHF 1 sends a termination response message #1 to the SMF 1. Accordingly, the SMF 1 receives the termination response message #1 from the CHF 1.

S1019 to S1021 are similar to S821 to S823 in the method 800. For brevity, details are not described herein again.

Optionally, S1022: The CHF 1 sends the user data #3 to the CHF 2 and the CHF 3. Accordingly, the CHF 2 and the CHF 3 receive the user data #3 from the CHF 1.

For example, the CHF 1 enables the user data #3 to migrate to the CHF 2 and the CHF 2. The user data #3 is remaining user data of the UE other than the user data #2. The user data #3 may be, for example, new user data generated by the CHF 1 between S1004 and S1020.

The SMF 2 and the CHF 2 continue to perform a subsequent charging procedure. A specific process is not limited in this application.

According to the foregoing solution, candidate CHFs of the UE synchronously maintain user data of the UE. Regardless of which candidate CHF becomes a serving CHF of the UE, the candidate CHF may directly perform charging processing on the UE based on the user data of the UE. According to the foregoing solution, cross-area transmission of a large amount of charging information generated in a charging process can be reduced, to save a network resource and reduce operation costs.

FIG. 11 is an example flowchart of a method 1100 according to an embodiment of this application. The method 1100 corresponds to the method 500 and the method 800. A difference lies in that the method 1100 is described by using an example in which a CHF is triggered, in a registration procedure in an offline charging scenario, to charge a UE.

The following describes the method 1100 by using an example with reference to steps in FIG. 11.

S1101: The UE sends a registration request message to a RAN. Accordingly, the RAN receives the registration request message from the UE.

S1102: The RAN performs AMF selection.

S1103: The RAN sends the registration request message to an AMF 2. Accordingly, the AMF 2 receives the registration request message from the RAN.

For example, because the UE moves, the UE is triggered to send the registration request (registration request) message to the RAN. After receiving the registration request message from the UE, the RAN selects an AMF (denoted as the AMF 2) that serves the UE, and then the RAN routes the received registration request message to the AMF 2.

Optionally, S1104: The AMF 2 sends a UE context transfer request message to an AMF 1. Accordingly, the AMF 1 receives the UE context transfer request message from the AMF 2.

For example, after receiving the registration request message, the AMF 2 determines, based on a GUTI carried in the registration request message, an AMF (denoted as the AMF 1) that serves the UE last time. Then, the AMF 2 sends the UE context transfer (Namf_Communication_UEContextTransfer) request message to the AMF 1, to request to obtain context information of the UE. The UE context transfer request message includes an identifier of the UE.

S1105: The AMF 1 sends a UE context transmission response message to the AMF 2. Accordingly, the AMF 2 receives the UE context transfer response message from the AMF 1.

For example, after receiving the UE context transfer request message from the AMF 2, the AMF 1 obtains the UE context information of the UE from a database based on the identifier of the UE, and then sends the context information of the UE to the AMF 2 via the UE context transfer response message.

It may be understood that S1101 to S1105 merely describe some steps in the UE registration procedure by using an example. For a detailed process, refer to an existing protocol. Details are not described herein.

S1106: The AMF 2 sends an initial request message #1 to a CHF 2. Accordingly, the CHF 2 receives the initial request message #1 from the AMF 2.

For example, in the UE registration procedure, for example, after receiving the UE context transfer response message, the AMF 2 sends the initial request message #1 to the CHF 2, where the initial request message is for requesting to charge the UE.

It may be understood that, for specific implementations in which the AMF 2 sends the initial request message to the CHF 2, refer to the implementations in which the charging trigger function network element sends the charging request message to the first charging function network element in S401 in the method 400. For example, the AMF 2 in S1106 corresponds to the charging trigger function network element in S401, the CHF 2 in S1106 corresponds to the first charging function network element in S401, and the initial request message in S1106 corresponds to the charging request message in S401. Details are not described herein again.

Optionally, S1107: The CHF 2 sends a data obtaining request message to a CHF 1. Accordingly, the CHF 1 receives the data obtaining request message from the CHF 2.

Optionally, S1108: The CHF 1 sends user data #2 to the CHF 2. Accordingly, the CHF 2 receives the user data #2 from the CHF 1.

For example, after receiving an initial request message #2 from an SMF 2, the CHF 2 determines, in local storage based on the identifier of the UE, address information of a CHF (denoted as the CHF 1) that provides a charging service for the UE last time.

It may be understood that, when serving as a serving CHF of the UE, the CHF 1 broadcasts information #1 to candidate CHFs (assumed to be the CHF 2 and a CHF 3 in this application) of the UE. The information #1 indicates that the CHF 1 is a network element that currently provides the charging service for the UE. For a specific process, refer to the descriptions of S504 in the method 500. Details are not described herein again.

Further, the CHF 2 sends the data obtaining request message to the CHF 1 based on the address information of the CHF 1, where the data obtaining request message is for requesting to obtain the user data of the UE. The CHF 1 returns the user data #2 to the CHF 2 based on the data obtaining request message from the CHF 2. For a specific process, refer to the descriptions of S513 and S514 in the method 500. Details are not described herein again.

S1109: The CHF 2 charges the UE based on the user data.

S1110: The CHF 1 sends an initial response message to the AMF 1. Accordingly, the AMF 1 receives the initial response message from the CHF 1.

S1111: The CHF 2 sends information #2 to the CHF 1 and the CHF 3. Accordingly, the CHF 1 and the CHF 3 receive the information #2 from the CHF 2.

S1109 to S1111 are similar to S515 to S517 in the method 500. For brevity, details are not described herein again.

According to the foregoing solution, when the serving CHF of the UE is changed due to a location change of the UE, a CHF nearest to the UE obtains the user data of the UE via the CHF that provides the charging service for the UE last time, and provides the charging service for the UE. In this way, cross-area transmission of a large amount of charging information generated in a charging process can be reduced, to save a network resource and reduce operation costs.

FIG. 12 is an example flowchart of a method 1200 according to an embodiment of this application. The method 1200 corresponds to the method 600 and the method 900. A difference lies in that the method 1200 is described by using an example in which a CHF is triggered, in a registration procedure in an offline charging scenario, to charge a UE.

The following describes the method 1100 by using an example with reference to steps in FIG. 11.

S1201: The UE sends a registration request message to a RAN. Accordingly, the RAN receives the registration request message from the UE.

S1202: The RAN performs AMF selection.

S1203: The RAN sends the registration request message to an AMF 2. Accordingly, the AMF 2 receives the registration request message from the RAN.

Optionally, S1204: The AMF 2 sends a UE context transfer request message to an AMF 1. Accordingly, the AMF 1 receives the UE context transfer request message from the AMF 2.

S1205: The AMF 1 sends a UE context transmission response message to the AMF 2. Accordingly, the AMF 2 receives the UE context transfer response message from the AMF 1.

S1206: The AMF 2 sends an initial request message #1 to a CHF 2. Accordingly, the CHF 2 receives the initial request message #1 from the AMF 2.

S1201 to S1206 are similar to S1101 to S1106 in the method 1100. For brevity, details are not described herein again.

Optionally, S1207: The CHF 2 sends a data obtaining request message to an NRF. Accordingly, the NRF receives the data obtaining request message from the CHF 2.

Optionally, S1208: The NRF sends a query response message to the CHF 2. Accordingly, the CHF 2 receives the query response message from the NRF.

For example, after receiving the initial request message from an SMF 2, the CHF 2 sends a query request message to the NRF, where the query request message includes an identifier of the UE, and the query request message is for querying for address information of a network element that currently provides a charging service for the UE.

It may be understood that, when serving as a serving CHF of the UE, a CHF 1 sends information #1 to the NRF. The information #1 indicates that the CHF 1 is the network element that currently provides the charging service for the UE. For a specific process, refer to the descriptions of S604 in the method 600. Details are not described herein again.

S1209: The CHF 2 sends a data obtaining request message to the CHF 1. Accordingly, the CHF 1 receives the data obtaining request message from the CHF 2.

S1210: The CHF 1 sends user data #2 to the CHF 2. Accordingly, the CHF 2 receives the user data #2 from the CHF 1.

S1211: The CHF 2 charges the UE based on the user data.

S1212: The CHF 1 sends an initial response message to the AMF 1. Accordingly, the AMF 1 receives the initial response message from the CHF 1.

S1213: The CHF 2 sends information #2 to the CHF 1 and a CHF 3. Accordingly, the CHF 1 and the CHF 3 receive the information #2 from the CHF 2.

S1209 to S1213 are similar to S615 to S619 in the method 600. For brevity, details are not described herein again.

According to the foregoing solution, when the serving CHF of the UE is changed due to a location change of the UE, the CHF 2 nearest to the UE queries, via the NRF, for the CHF 1 that provides the charging service for the UE last time, obtains the user data of the UE via the CHF 1, and provides the charging service for the UE. In this way, cross-area transmission of a large amount of charging information generated in a charging process can be reduced, to save a network resource and reduce operation costs.

FIG. 13 is an example flowchart of a method 1300 according to an embodiment of this application. The method 1300 corresponds to the method 700 and the method 1000. A difference lies in that the method 1300 is described by using an example in which a CHF is triggered, in a registration procedure in an offline charging scenario, to charge a UE.

The following describes the method 1300 by using an example with reference to steps in FIG. 13.

S1301: The UE sends a registration request message to a RAN. Accordingly, the RAN receives the registration request message from the UE.

S1302: The RAN performs AMF selection.

S1303: The RAN sends the registration request message to an AMF 2. Accordingly, the AMF 2 receives the registration request message from the RAN.

Optionally, S1304: The AMF 2 sends a UE context transfer request message to an AMF 1. Accordingly, the AMF 1 receives the UE context transfer request message from the AMF 2.

S1305: The AMF 1 sends a UE context transmission response message to the AMF 2. Accordingly, the AMF 2 receives the UE context transfer response message from the AMF 1.

S1306: The AMF 2 sends an initial request message to a CHF 2. Accordingly, the CHF 2 receives the initial request message from the AMF 2.

S1301 to S1306 are similar to S1101 to S1106 in the method 1100. For brevity, details are not described herein again.

S1307: The CHF 2 performs charging processing on the UE based on user data #2.

For example, after receiving the initial request message from an SMF 1, the CHF 2 obtains, from local storage based on an identifier of the UE carried in the initial request message, the user data #2 corresponding to the identifier of the UE.

It may be understood that the user data #2 is received by the CHF 2 from a CHF 1 in advance. For example, when serving as a serving CHF of the UE, the CHF 1 broadcasts the user data #2 of the UE to a candidate CHF of the UE after performing charging processing on the UE. The user data #2 is user data updated by performing charging processing on the UE by the CHF 1. The CHF 2 receives and stores the user data #2. For a specific process, refer to the descriptions of S704 in the method 700. Details are not described herein again.

Further, the CHF 2 charges the UE based on the user data #2. For a specific process, refer to S713 in the method 700. Details are not described herein again.

S1308: The CHF 2 sends an initial response message to an SMF 2. Accordingly, the SMF 2 receives the initial response message from the CHF 2.

S1309: The CHF 2 sends user data #3 to the CHF 1 and a CHF 3. Accordingly, the CHF 1 and the CHF 3 receive the user data #3 from the CHF 2.

S1308 and S1309 are similar to S714 and S715 in the method 700. For brevity, details are not described herein again.

According to the foregoing solution, candidate CHFs of the UE synchronously maintain user data of the UE. Regardless of which candidate CHF becomes the serving CHF of the UE, the candidate CHF may directly perform charging processing on the UE based on the user data of the UE. According to the foregoing solution, cross-area transmission of a large amount of charging information generated in a charging process can be reduced, to save a network resource and reduce operation costs.

The solutions provided in embodiments of this application may alternatively be applied to an MEC scenario. For example, when a user accesses a MEC service, if a CHF of a UE is changed, the solution shown in the method 400 may be performed to charge the UE. With reference to FIG. 14 to FIG. 16, the following describes three solutions for charging the UE in the MEC scenario. In other words, the method 1400 to the method 1600 are three possible implementations in which the method 400 is applied to the MEC scenario.

It should be noted that, in the method 1400 to the method 1600, both a MEC 1 CTF and a MEC 2 CTF are CTFs in MEC scenarios, where the MEC 1 CTF is a CTF that serves the UE before the MEC 2 CTF; and both a CHF 1 and a CHF 2 are network elements that provide a charging service for the UE, where the CHF 1 provides the charging service for the UE after the CHF 2. In other words, in the method 1400 to the method 1600, a serving CHF of the UE is switched from the CHF 1 to the CHF 2.

FIG. 14 is an example flowchart of a method 1400 according to an embodiment of this application. The method 1400 corresponds to the method 500 and the method 800, and a difference mainly lies in that the method 1400 is applied to a MEC scenario. The following describes the method 1400 by using an example with reference to steps in FIG. 14.

S1401: A MEC 1 CTF sends an initial request message #1 to a CHF 1. Accordingly, the CHF 1 receives the initial request message #1 from the MEC 1 CTF.

For example, after a service of a user in MEC 1 is started, the MEC 1 CTF sends the initial request message #1 to the CHF 1, to request the CHF 1 to charge for the service of a UE in the MEC 1.

For a specific process, refer to the descriptions of S401 in the method 400. Details are not described herein again. The initial request message #1 in S1401 may correspond to the charging request message in S401.

S1402: The CHF 1 performs charging processing on the UE based on user data #1.

For example, after receiving the initial request message #1 from the MEC 1 CTF, the CHF 1 obtains the user data #1 of the UE, and then performs charging processing on the UE based on the user data #1. A specific process is not limited in this application.

S1403: The CHF 1 sends an initial response message #1 to the MEC 1 CTF. Accordingly, the MEC 1 CTF receives the initial response message #1 from the CHF 1.

S1404: The CHF 1 sends information #1 to a CHF 2 and a CHF 3. Accordingly, the CHF 2 and the CHF 3 receive the information #1 from the CHF 1.

For example, assuming that the CHF 2 and the CHF 3 are current candidate CHFs of the UE, the CHF 1 sends the information #1 to the CHF 2 and the CHF 3 after the CHF 1 performs charging processing on the UE. The information #1 indicates that the CHF 1 is a network element that currently provides a charging service for the UE. A specific process is similar to S504 in the method 500. For brevity, details are not described herein again.

Optionally, S1405: The MEC 1 CTF sends a termination request message to the CHF 1. Accordingly, the CHF 1 receives the termination request message from the MEC 1 CTF.

Optionally, S1406: The CHF 1 sends a termination response message to the MEC 1 CTF. Accordingly, the MEC 1 CTF receives the termination response message from the CHF 1.

For example, the MEC 1 CTF sends the termination request (termination request) message to the CHF 1, to request to release a charging resource that is of a MEC service and that is between the MEC 1 CTF and an old CHF. After receiving the termination request message #1 from an SMF 1, the CHF 1 releases the charging resource, and returns the termination response (termination response) message.

S1407: A MEC 2 CTF sends an initial request message #2 to the CHF 2. Accordingly, the CHF 2 receives the initial request message #2 from the MEC 2 CTF.

For example, after a service of the user in MEC 2 is started, the MEC 2 CTF sends the initial request message #2 to the CHF 2, to request the CHF 2 to charge for a service of the UE in the MEC 2. Specific implementations are similar to S512 in the method 500. Details are not described herein again.

In a first possible implementation, the MEC 2 CTF sends the initial request message #2 only after a charging session between the MEC 1 CTF and the CHF 1 is terminated. In other words, S1407 may be performed after S1406.

In a second possible implementation, the MEC 2 CTF may alternatively send the initial request message #2 before a charging session between the MEC 1 CTF and the CHF 1 is terminated. The charging session between the CTF of the MEC 1 and the CHF 1 is terminated only after a charging session between the MEC 2 CTF and the CHF 2 is established. For details, refer to subsequent descriptions of S1413 and S1414. Details are not described herein again.

It may be understood that selection of the foregoing two implementations depends on a service session switching method implemented in MEC or a switching mode configured in the MEC. The two implementations are two parallel manners, and are not simultaneously performed.

S1408: The CHF 2 sends a data obtaining request message to the CHF 1. Accordingly, the CHF 1 receives the data obtaining request message from the CHF 2.

S1409: The CHF 1 sends user data #2 to the CHF 2. Accordingly, the CHF 2 receives the user data #2 from the CHF 1.

S1410: The CHF 2 performs charging processing on the UE based on the user data #2.

S1411: The CHF 2 sends an initial response message to an SMF 2. Accordingly, the SMF 2 receives the initial response message from the CHF 2.

S1412: The CHF 2 sends information #2 to the CHF 1 and the CHF 3. Accordingly, the CHF 1 and the CHF 3 receive the information #2 from the CHF 2.

S1408 to S1412 are similar to S513 to S517 in the method 500. For brevity, details are not described herein again.

S1413: The MEC 1 CTF sends a termination request message to the CHF 1. Accordingly, the CHF 1 receives the termination request message from the MEC 1 CTF.

For example, in correspondence to the second possible implementation in S1407, after the establishment of the charging session between the MEC 2 CTF and the CHF 2 is completed, the MEC 1 CTF sends the termination request (termination request) message to the CHF 1, to request to release the charging resource that is of the MEC service of the user and that is between the MEC 1 CTF and the old CHF (the CHF 1). Specifically, the UE and the MEC 2 CTF complete establishment of a service session. In this case, creation of a charging resource between the MEC 2 CTF and the CHF 2 is completed. In this case, the UE releases an old service session between the UE and the MEC 1 CTF. When the old service session is released, the MEC 1 CTF sends a charging termination request to the CHF 1 to release the charging resource created by the CHF 1 for the terminal device.

S1414: The CHF 1 sends a termination response message #1 to the MEC 1 CTF. Accordingly, the MEC 1 CTF receives the termination response message #1 from the CHF 1.

According to the foregoing solution, when a serving CHF of the UE is changed due to a location change of the UE, a CHF nearest to the UE obtains user data of the UE via a CHF that provides the charging service for the UE last time, and provides the charging service for the UE. In this way, cross-area transmission of a large amount of charging information generated in a charging process can be reduced, to save a network resource and reduce operation costs.

FIG. 15 is an example flowchart of a method 1500 according to an embodiment of this application. The method 1500 corresponds to the method 600 and the method 900, and a difference mainly lies in that the method 1500 is applied to a MEC scenario. The following describes the method 1500 by using an example with reference to steps in FIG. 15.

S1501: A MEC 1 CTF sends an initial request message #1 to a CHF 1. Accordingly, the CHF 1 receives the initial request message #1 from the MEC 1 CTF.

S1502: The CHF 1 performs charging processing on a UE based on user data #1.

S1503: The CHF 1 sends an initial response message #1 to the MEC 1 CTF. Accordingly, the MEC 1 CTF receives the initial response message #1 from the CHF 1.

S1501 to S1503 are similar to S1401 to S1403 in the method 1400. For brevity, details are not described herein again.

S1504: The CHF 1 sends information #1 to an NRF. Accordingly, the NRF receives the information #1 from the CHF 1.

S1504 is similar to S604 in the method 600. For brevity, details are not described herein again.

Optionally, S1505: The MEC 1 CTF sends a termination request message to the CHF 1. Accordingly, the CHF 1 receives the termination request message from the MEC 1 CTF.

Optionally, S1506: The CHF 1 sends a termination response message to the MEC 1 CTF. Accordingly, the MEC 1 CTF receives the termination response message from the CHF 1.

S1505 and S1506 are similar to S1405 and S1406 in the method 1400. Details are not described herein again.

S1507: A MEC 2 CTF sends an initial request message #2 to a CHF 2. Accordingly, the CHF 2 receives the initial request message #2 from the MEC 2 CTF.

S1508: The CHF 2 sends a query request message to the NRF. Accordingly, the NRF receives the query request message from the CHF 2.

S1509: The NRF sends a query response message to the CHF 2. Accordingly, the CHF 2 receives the query response message from the NRF.

S1510: The CHF 2 sends a data obtaining request message to the CHF 1. Accordingly, the CHF 1 receives the data obtaining request message from the CHF 2.

S1511: The CHF 1 sends user data #2 to the CHF 2. Accordingly, the CHF 2 receives the user data #2 from the CHF 1.

S1512: The CHF 2 performs charging processing on a UE based on the user data #2.

S1513: The CHF 2 sends an initial response message to an SMF 2. Accordingly, the SMF 2 receives the initial response message from the CHF 2.

S1514: The CHF 2 sends information #2 to the NRF. Accordingly, the NRF receives the information #1 from the CHF 2.

S1507 to S1514 are similar to S612 to S619 in the method 600. For brevity, details are not described herein again.

S1513: The MEC 1 CTF sends a termination request message to the CHF 1. Accordingly, the CHF 1 receives the termination request message from the MEC 1 CTF.

S1514: The CHF 1 sends a termination response message #1 to the MEC 1 CTF. Accordingly, the MEC 1 CTF receives the termination response message #1 from the CHF 1.

S1513 and S1514 are similar to S1413 and S1414 in the method 1400. For brevity, details are not described herein again.

According to the foregoing solution, when a serving CHF of the UE is changed due to a location change of the UE, the CHF 2 nearest to the UE queries, via the NRF, for the CHF 1 that provides a charging service for the UE last time, obtains the user data of the UE via the CHF 1, and provides the charging service for the UE. In this way, cross-area transmission of a large amount of charging information generated in a charging process can be reduced, to save a network resource and reduce operation costs.

FIG. 16 is an example flowchart of a method 1600 according to an embodiment of this application. The method 1600 corresponds to the method 700 and the method 1000, and a difference mainly lies in that the method 1600 is applied to a MEC scenario. The following describes the method 1600 by using an example with reference to steps in FIG. 16.

S1601: A MEC 1 CTF sends an initial request message #1 to a CHF 1. Accordingly, the CHF 1 receives the initial request message #1 from the MEC 1 CTF.

S1602: The CHF 1 performs charging processing on a UE based on user data #1.

S1603: The CHF 1 sends an initial response message #1 to the MEC 1 CTF. Accordingly, the MEC 1 CTF receives the initial response message #1 from the CHF 1.

S1601 to S1603 are similar to S1401 to S1403 in the method 1400. For brevity, details are not described herein again.

S1604: The CHF 1 sends user data #2 to a CHF 2 and a CHF 3. Accordingly, the CHF 2 and the CHF 3 receive the user data #2 from the CHF 1.

S1604 is similar to S704 in the method 700. For brevity, details are not described herein again.

Optionally, S1605: The MEC 1 CTF sends a termination request message to the CHF 1. Accordingly, the CHF 1 receives the termination request message from the MEC 1 CTF.

Optionally, S1606: The CHF 1 sends a termination response message to the MEC 1 CTF. Accordingly, the MEC 1 CTF receives the termination response message from the CHF 1.

S1605 and S1606 are similar to S1405 and S1406 in the method 1400. Details are not described herein again.

S1607: A MEC 2 CTF sends an initial request message #2 to the CHF 2. Accordingly, the CHF 2 receives the initial request message #2 from the MEC 2 CTF.

S1608: The CHF 2 performs charging processing on a UE based on the user data #2.

S1609: The CHF 2 sends an initial response message to an SMF 2. Accordingly, the SMF 2 receives the initial response message from the CHF 2.

S1610: The CHF 2 sends user data #3 to the CHF 1 and the CHF 3. Accordingly, the CHF 1 and the CHF 3 receive the user data #3 from the CHF 2.

S1607 to S1610 are similar to S712 to S715 in the method 700. For brevity, details are not described herein again.

S1611: The MEC 1 CTF sends a termination request message to the CHF 1. Accordingly, the CHF 1 receives the termination request message from the MEC 1 CTF.

S1612: The CHF 1 sends a termination response message #1 to the MEC 1 CTF. Accordingly, the MEC 1 CTF receives the termination response message #1 from the CHF 1.

S1611 and S1612 are similar to S1413 and S1414 in the method 1400. For brevity, details are not described herein again.

According to the foregoing solution, candidate CHFs of the UE synchronously maintain user data of the UE. Regardless of which candidate CHF becomes a serving CHF of the UE, the candidate CHF may directly perform charging processing on the UE based on the user data of the UE. According to the foregoing solution, cross-area transmission of a large amount of charging information generated in a charging process can be reduced, to save a network resource and reduce operation costs.

In correspondence to the methods provided in the foregoing method embodiments, embodiments of this application further provide corresponding apparatuses. The apparatuses include corresponding modules configured to perform the foregoing method embodiments. The module may be software, hardware, or a combination of the software and the hardware. It may be understood that technical features described in the foregoing method embodiments are also applicable to the following apparatus embodiments. Therefore, for content that is not described in detail, refer to the foregoing method embodiments. For brevity, details are not described herein again.

FIG. 17 is a schematic block diagram of a communication apparatus 10 according to an embodiment of this application. The apparatus 10 includes a transceiver module 11 and/or a processing module 12. The transceiver module 11 may implement a corresponding communication function. The processing module 12 is configured to perform data processing. In other words, the transceiver module 11 is configured to perform operations related to receiving and sending. The processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement an action of the device or the network element in the foregoing method embodiments.

In a first design, the apparatus 10 may correspond to the charging function network element (for example, the first charging function network element or the second charging function network element in FIG. 4, or the CHF 1 or the CHF 2 in FIG. 5 to FIG. 16) in the foregoing method embodiments or a component (for example, a chip) of the charging function network element.

The apparatus 10 may implement corresponding steps or procedures performed by the charging function network element in the foregoing method embodiments. The transceiver module 11 may be configured to perform operations related to receiving and sending of the charging function network element in the foregoing method embodiments. The processing module 12 may be configured to perform a processing-related operation of the charging function network element in the foregoing method embodiments.

In a possible implementation, the transceiver module 11 is configured to receive a charging request message from a charging trigger function network element, where the charging request message is for requesting to charge a terminal device. The processing module 12 is configured to perform charging processing on the terminal device based on user data of the terminal device, where the user data is received by the first charging function network element from a second charging function network element, and the second charging function network element is a network element that provides a charging service for the terminal device before the charging apparatus.

In a second design, the apparatus 10 may correspond to the charging trigger function network element (for example, the charging trigger function network element in FIG. 4, the SMF 1 or the SMF 2 in FIG. 5 to FIG. 10B, the AMF 1 or the AMF 2 in FIG. 11 to FIG. 13, or the MEC 1 CTF or the MEC 2 CTF in FIG. 14 to FIG. 16) in the foregoing method embodiments or a component (for example, a chip) of the charging trigger function network element.

The apparatus 10 may implement corresponding steps or procedures performed by the charging trigger function network element in the foregoing method embodiments. The transceiver module 11 may be configured to perform operations related to receiving and sending of the charging trigger function network element in the foregoing method embodiments. The processing module 12 may be configured to perform a processing-related operation of the charging trigger function network element in the foregoing method embodiments.

In a possible implementation, the processing module 12 is configured to obtain address information of a first charging function network element based on information about the charging trigger function network element and/or location information of a terminal device. The transceiver module 11 is configured to send a charging request message to the first charging function network element, where the charging request message is for requesting the first charging function network element to charge the terminal device.

It should be understood that a specific process in which the modules perform the foregoing corresponding steps has been described in detail in the foregoing method embodiments. For brevity, details are not described herein again.

It should be further understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the charging function network element in the foregoing embodiments, and may be configured to perform procedures and/or steps corresponding to the charging function network element in the foregoing method embodiments. Alternatively, the apparatus 10 may be specifically the charging trigger function network element in the foregoing embodiments, and may be configured to perform procedures and/or steps corresponding to the charging trigger function network element in the foregoing method embodiments. To avoid repetition, details are not described herein again.

The apparatus 10 in the foregoing solutions has a function of implementing corresponding steps performed by the device (for example, the charging function network element or the charging trigger function network element) in the foregoing method. The function may be implemented by using hardware, or may be implemented by the hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform receiving and sending operations and a related processing operation in the method embodiments.

In addition, the transceiver module 11 may alternatively be a transceiver circuit (for example, the transceiver circuit may include a receiver circuit and a transmitter circuit), and the processing module may be a processing circuit.

FIG. 18 is a diagram of another communication apparatus 20 according to an embodiment of this application. The apparatus 20 includes a processor 21. The processor 21 is configured to perform a processing-related operation in the foregoing method embodiments. Optionally, there are one or more processors 21. The apparatus 20 further includes a transceiver 22, and the transceiver 22 is configured to receive a signal and/or send a signal. For example, the processor 21 is configured to control the transceiver 22 to receive the signal and/or send the signal. Optionally, there are one or more transceivers 22.

Optionally, as shown in FIG. 18, the apparatus 20 further includes a memory 23, and the memory 23 is configured to store a computer program or instructions and/or data. The memory 23 and the processor 21 may be integrated, or may be disposed separately. The processor 21 may read the computer program or the instructions stored in the memory 22, to perform the methods in the foregoing method embodiments. Optionally, there are one or more memories 23.

In a solution, the apparatus 20 is configured to implement operations performed by the charging function network element in the foregoing method embodiments.

In another solution, the apparatus 20 is configured to implement operations performed by the charging trigger function network element in the foregoing method embodiments.

It should be understood that, the processor mentioned in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is the general-purpose processor, the DSP, the ASIC, the FPGA or the another programmable logic device, the discrete gate or the transistor logic device, or the discrete hardware component, the memory (a storage module) may be integrated into the processor.

It should be further noted that the memory in this specification is intended to include, but is not limited to, these memories and any other suitable type of memory.

FIG. 19 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the charging function network element in the foregoing method embodiments.

For example, the logic circuit 31 is configured to implement a processing-related operation performed by the charging function network element in the foregoing method embodiments, for example, a processing-related operation performed by the charging function network element in the embodiment shown in FIG. 4 or the CHF 1 or the CHF 2 in FIG. 5 to FIG. 16. The input/output interface 32 is configured to implement an operation related to sending and/or receiving performed by the charging function network element in the foregoing method embodiments, for example, an operation related to sending and/or receiving performed by the charging function network element in the embodiment shown in FIG. 4 or the CHF 1 or the CHF 2 in FIG. 5 to FIG. 16.

In another solution, the chip system 30 is configured to implement operations performed by the charging trigger function network element in the foregoing method embodiments.

For example, the logic circuit 31 is configured to implement a processing-related operation performed by the charging trigger function network element in the foregoing method embodiments, for example, a processing-related operation performed by the charging trigger function network element in the embodiment shown in FIG. 4, the SMF 1 or the SMF 2 in FIG. 5 to FIG. 10B, the AMF 1 or the AMF 2 in FIG. 11 to FIG. 13, or the MEC 1 CTF or the MEC 2 CTF in FIG. 14 to FIG. 16. The input/output interface 32 is configured to implement an operation related to sending and/or receiving performed by the charging trigger function network element in the foregoing method embodiments, for example, an operation related to sending and/or receiving performed by the charging trigger function network element in the embodiment shown in FIG. 4, the SMF 1 or the SMF 2 in FIG. 5 to FIG. 10B, the AMF 1 or the AMF 2 in FIG. 11 to FIG. 13, or the MEC 1 CTF or the MEC 2 CTF in FIG. 14 to FIG. 16.

An embodiment of this application further provides a computer-readable storage medium. The computer-readable storage medium stores computer instructions for implementing the methods performed by the device in the foregoing method embodiments.

For example, when a computer program is executed by a computer, the computer is enabled to implement the methods performed by the charging function network element in the foregoing method embodiments.

For another example, when a computer program is executed by a computer, the computer is enabled to implement the methods performed by the charging trigger function network element in the foregoing method embodiments.

An embodiment of this application further provides a computer program product, including instructions. When the instructions are executed by a computer, the methods performed by the device (for example, the charging function network element or the charging trigger function network element) in the foregoing method embodiments are implemented.

An embodiment of this application further provides a communication system, including the foregoing charging function network element and the foregoing charging trigger function network element.

For explanations and beneficial effects of related content of any one of the apparatuses provided above, refer to the corresponding method embodiment provided above. Details are not described herein again.

In the several embodiments provided in this application, it should be understood that the disclosed apparatuses and methods may be implemented in other manners. For example, the foregoing apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, or a charging trigger function network element. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging method, comprising:
receiving, by a first charging function network element, a charging request message from a charging trigger function network element, wherein the charging request message is for requesting to charge a terminal device; and
performing, by the first charging function network element, charging processing on the terminal device based on user data of the terminal device, wherein the user data is received by the first charging function network element from a second charging function network element, and the second charging function network element is a network element that provides a charging service for the terminal device before the first charging function network element.

2. The method according to claim 1, wherein the method further comprises:
determining, by the first charging function network element, to obtain the user data of the terminal device from the second charging function network element;
sending, by the first charging function network element, a data obtaining request message to the second charging function network element, wherein the data obtaining request message is for requesting to obtain the user data of the terminal device; and
receiving, by the first charging function network element, the user data from the second charging function network element.

3. The method according to claim 2, wherein
before the receiving, by a first charging function network element, a charging request message from a charging trigger function network element, the method further comprises:
receiving, by the first charging function network element, first information from the second charging function network element, wherein the first information indicates that the second charging function network element is a network element that currently provides the charging service for the terminal device, and the first information comprises address information of the second charging function network element; and
storing, by the first charging function network element, the address information of the second charging function network element and an identifier of the terminal device;
before the sending, by the first charging function network element, a data obtaining request message to the second charging function network element, the method further comprises:
obtaining, by the first charging function network element, the address information of the second charging function network element from local storage based on the identifier of the terminal device; and
the sending, by the first charging function network element, a data obtaining request message to the second charging function network element comprises:
sending, by the first charging function network element, the data obtaining request message to the second charging function network element based on the address information of the second charging function network element.

4. The method according to any one of claims 1 to 3, wherein the method further comprises:
sending, by the first charging function network element, second information to at least one candidate charging function network element of the terminal device, wherein the second information indicates that the first charging function network element is a network element that currently provides the charging service for the terminal device, and the second information comprises the identifier of the terminal device and address information of the first charging function network element.

5. The method according to claim 2, wherein before the sending, by the first charging function network element, a data obtaining request message to the second charging function network element, the method further comprises:
sending, by the first charging function network element, a query request message to a network repository function network element, wherein the query request message comprises an identifier of the terminal device, and the query request message is for querying for address information of a network element that currently provides the charging service for the terminal device; and
receiving, by the first charging function network element, address information of the second charging function network element from the network repository function network element; and
the sending, by the first charging function network element, a data obtaining request message to the second charging function network element comprises:
sending, by the first charging function network element, the data obtaining request message to the second charging function network element based on the address information of the second charging function network element.

6. The method according to any one of claims 1, 2, and 5, wherein after the performing, by the first charging function network element, charging processing on the terminal device based on user data of the terminal device, the method further comprises:
sending, by the first charging function network element, third information to the network repository function network element, wherein the third information indicates that the first charging function network element is a network element that currently provides the charging service for the terminal device, and the third information comprises the identifier of the terminal device and address information of the first charging function network element.

7. The method according to claim 2, wherein the method further comprises:
obtaining, by the first charging function network element, address information of the second charging function network element from the charging request message; and
the sending, by the first charging function network element, a data obtaining request message to the second charging function network element comprises:
sending, by the first charging function network element, the data obtaining request message to the second charging function network element based on the address information of the second charging function network element.

8. The method according to any one of claims 2 to 7, wherein before the receiving, by the first charging function network element, the user data from the second charging function network element, the method further comprises:
sending, by the first charging function network element, a first charging response message to the charging trigger function network element, wherein the first charging response message indicates the charging trigger function network element to bypass a service of the terminal device.

9. The method according to claim 8, wherein after the performing, by the first charging function network element, charging processing on the terminal device based on user data of the terminal device, the method further comprises:
sending, by the first charging function network element, a second charging response message to the charging trigger function network element, wherein the second charging response message comprises a processing result of performing charging processing on the terminal device by the first charging function network element.

10. The method according to claim 8, wherein after the receiving, by the first charging function network element, the user data from the second charging function network element, the method further comprises:
sending, by the first charging function network element, indication information to the charging trigger function network element, wherein the indication information indicates to re-request to charge the terminal device; and
receiving, by the first charging function network element, a charging request message from the charging trigger function network element again, wherein the charging request message is for requesting to charge the terminal device.

11. The method according to any one of claims 1 to 10, wherein the user data is data needed for performing charging processing; and
after the performing, by the first charging function network element, charging processing on the terminal device based on user data of the terminal device, the method further comprises:
receiving, by the first charging function network element from the second charging function network element, data other than the user data in data associated with the terminal device.

12. The method according to claim 1, wherein before the receiving, by a first charging function network element, a charging request message from a charging trigger function network element, the method further comprises:
receiving, by the first charging function network element, the user data from the second charging function network element; and
storing, by the first charging function network element, the user data.

13. The method according to claim 12, wherein after the performing, by the first charging function network element, charging processing on the terminal device based on user data of the terminal device, the method further comprises:
sending, by the first charging function network element, a charging result to at least one candidate charging function network element of the terminal device, wherein the charging result is data obtained by performing charging processing on the terminal device by the first charging function network element.

14. A charging method, comprising:
obtaining, by a charging trigger function network element, address information of a first charging function network element based on information about the charging trigger function network element and/or location information of a terminal device; and
sending, by the charging trigger function network element, a charging request message to the first charging function network element based on the address information, wherein the charging request message is for requesting the first charging function network element to charge the terminal device.

15. The method according to claim 14, wherein the obtaining, by a charging trigger function network element, address information of a first charging function network element based on information about the charging trigger function network element and/or location information of a terminal device comprises:
sending, by the charging trigger function network element, a query request message to a network repository function network element, wherein the query request message is for requesting to obtain address information of a candidate charging function network element configured to perform charging processing on the terminal device, and the query request message comprises the location information of the terminal device and/or the information about the charging trigger function network element; and
receiving, by the charging trigger function network element, the address information of the first charging function network element from the repository function network element.

16. The method according to claim 14, wherein the obtaining, by a charging trigger function network element, address information of a first charging function network element based on information about the charging trigger function network element and/or location information of a terminal device comprises:
determining, by the charging trigger function network element in local configuration information based on the location information of the terminal device and/or the information about the charging trigger function network element, the address information of the first charging function network element corresponding to the location information of the terminal device and/or the information about the charging trigger function network element.

17. The method according to any one of claims 14 to 16, wherein the charging request message comprises address information of a second charging function network element, and the second charging function network element is a network element that provides a charging service for the terminal device before the charging function network element.

18. The method according to any one of claims 14 to 17, wherein the method further comprises:
receiving, by the charging trigger function network element, a first charging response message from the first charging function network element, wherein the first charging response message indicates the charging trigger function network element to bypass a service of the terminal device; and
bypassing, by the charging trigger function network element, the service of the terminal device based on the first charging response message.

19. The method according to claim 18, wherein the method further comprises:
receiving, by the charging trigger function network element, a second charging response message from the first charging function network element, wherein the second charging response message comprises a processing result of performing charging processing on the terminal device by the first charging function network element.

20. The method according to claim 18, wherein the method further comprises:
receiving, by the charging trigger function network element, indication information from the first charging function network element, wherein the indication information indicates to re-request to charge the terminal device; and
sending, by the charging trigger function network element, a charging request message to the first charging function network element again based on the indication information, wherein the charging request message is for requesting to charge the terminal device.

21. A charging method, comprising:
sending, by a charging trigger function network element, a charging request message to a first charging function network element, wherein the charging request message is for requesting to charge a terminal device;
receiving, by the first charging function network element, the charging request message from the charging trigger function network element; and
performing, by the first charging function network element, charging processing on the terminal device based on user data of the terminal device, wherein the user data is received by the first charging function network element from a second charging function network element, and the second charging function network element is a network element that provides a charging service for the terminal device before the first charging function network element.

22. The method according to claim 21, wherein the method further comprises:
obtaining, by the charging trigger function network element, address information of the first charging function network element based on information about the charging trigger function network element and/or location information of the terminal device; and
the sending, by a charging trigger function network element, a charging request message to a first charging function network element comprises:
sending, by the charging trigger function network element, the charging request message to the first charging function network element based on the address information.

23. The method according to claim 22, wherein the obtaining, by the charging trigger function network element, address information of the first charging function network element based on information about the charging trigger function network element and/or location information of the terminal device comprises:
sending, by the charging trigger function network element, a query request message to a network repository function network element, wherein the query request message is for requesting to obtain address information of a candidate charging function network element configured to perform charging processing on the terminal device, and the query request message comprises the location information of the terminal device and/or the information about the charging trigger function network element; and
receiving, by the charging trigger function network element, the address information of the first charging function network element from the repository function network element.

24. The method according to claim 22, wherein the obtaining, by the charging trigger function network element, address information of the first charging function network element based on information about the charging trigger function network element and/or location information of the terminal device comprises:
determining, by the charging trigger function network element in local configuration information based on the location information of the terminal device and/or the information about the charging trigger function network element, the address information of the first charging function network element corresponding to the location information of the terminal device and/or the information about the charging trigger function network element.

25. The method according to claims 21 to 24, wherein the method further comprises:
determining, by the first charging function network element, to obtain the user data of the terminal device from the second charging function network element;
sending, by the first charging function network element, a data obtaining request message to the second charging function network element, wherein the data obtaining request message is for requesting to obtain the user data of the terminal device, and the data obtaining request message comprises an identifier of the terminal device;
receiving, by the second charging function network element, the data obtaining request message from the first charging function network element;
determining, by the second charging function network element, the user data of the terminal device based on the identifier of the terminal device;
sending, by the second charging function network element, the user data to the first charging function network element; and
receiving, by the first charging function network element, the user data from the second charging function network element.

26. The method according to claim 25, wherein
before the receiving, by the first charging function network element, the charging request message from the charging trigger function network element, the method further comprises:
sending, by the second charging function network element, first information to at least one candidate charging function network element of the terminal device, wherein the first information indicates that the second charging function network element is a network element that currently provides the charging service for the terminal device, and the first information comprises address information of the second charging function network element;
receiving, by the first charging function network element, the first information from the second charging function network element; and
storing, by the first charging function network element, the address information of the second charging function network element and the identifier of the terminal device; and
before the sending, by the first charging function network element, a data obtaining request message to the second charging function network element, the method further comprises:
obtaining, by the first charging function network element, the address information of the second charging function network element from local storage based on the identifier of the terminal device.

27. The method according to claim 25, wherein before the sending, by the first charging function network element, a data obtaining request message to the second charging function network element, the method further comprises:
sending, by the first charging function network element, a query request message to the network repository function network element, wherein the query request message comprises the identifier of the terminal device, and the query request message is for querying for address information of a network element that currently provides the charging service for the terminal device;
determining, by the network repository function network element, address information of the second charging function network element based on the identifier of the terminal device;
sending, by the network repository function network element, the address information of the second charging function network element to the first charging function network element; and
receiving, by the first charging function network element, the address information of the second charging function network element from the network repository function network element.

28. The method according to claim 27, wherein after the performing, by the first charging function network element, charging processing on the terminal device based on user data of the terminal device, the method further comprises:
sending, by the first charging function network element, third information to the network repository function network element, wherein the third information indicates that the first charging function network element is a network element that currently provides the charging service for the terminal device, and the third information comprises the identifier of the terminal device and the address information of the first charging function network element;
receiving, by the network repository function network element, the third information from the first charging function network element; and
recording, by the network repository function network element based on the third information, that the first charging function network element is the network element that currently provides the charging service for the terminal device.

29. The method according to claim 21, wherein before the receiving, by the first charging function network element, the charging request message from the charging trigger function network element, the method further comprises:
sending, by the second charging function network element, the user data to the first charging function network element;
receiving, by the first charging function network element, the user data from the second charging function network element; and
storing, by the first charging function network element, the user data.

30. The method according to claim 33, wherein after the receiving, by the first charging function network element, the charging request message from the charging trigger function network element, the method further comprises:
sending, by the first charging function network element, a charging result to at least one candidate charging function network element of the terminal device, wherein the charging result is data obtained by performing charging processing on the terminal device by the first charging function network element; and
receiving, by the second charging function network element, the charging result from the first charging function network element.

31. A communication apparatus, wherein the apparatus comprises a module configured to perform the method according to any one of claims 1 to 13 or a module configured to perform the method according to any one of claims 14 to 20.

32. A communication apparatus, comprising:
a processor, configured to execute a computer program stored in a memory, to enable the apparatus to perform the method according to any one of claims 1 to 13, or to enable the apparatus to perform the method according to any one of claims 14 to 20.

33. A computer program product, wherein the computer program product comprises instructions for performing the method according to any one of claims 1 to 13, or the computer program product comprises instructions for performing the method according to any one of claims 14 to 20.

34. A computer-readable storage medium, comprising: the computer-readable storage medium stores a computer program; and when the computer program is run on a computer, the computer is enabled to perform the method according to any one of claims 1 to 13, or the computer is enabled to perform the method according to any one of claims 14 to 20.

35. A communication system, comprising a first communication device and a session function control network element, wherein
the first communication device is configured to perform the method according to any one of claims 1 to 13, and the session control function device is configured to perform the method according to any one of claims 14 to 20.
